# EUROPÄISCHE PATENTSCHRIFT

(11) **EP 3 878 076 B1**
(45) Veröffentlichungstag und Bekanntmachung des Hinweises auf die Patenterteilung: **03.08.2022**
(21) Anmeldenummer: 19794516.5
(22) Anmeldetag: 24.10.2019
(51) Int. Cl.: H02K 3/28, H02K 3/14, H02K 15/04

(54) **ELEKTRISCHE MASCHINE**
ELECTRICAL MACHINE
MACHINE ÉLECTRIQUE

(30) Priorität: 07.11.2018 DE 102018218962
(43) Veröffentlichungstag der Anmeldung: 15.09.2021
(73) Patentinhaber: Audi AG, 85045 Ingolstadt (DE)
(72) Erfinder: WEBER, Korbinian, 85049 Ingolstadt (DE)
(86) Internationale Anmeldenummer: PCT/EP2019/078997
(87) Internationale Veröffentlichungsnummer: WO 2020/094405

(56) Entgegenhaltungen:
- DE-A1-102017 201 533
- US-A- 5 722 153
- US-A1- 2005 248 229
- US-A1- 2009 140 596

## Beschreibung

Die Erfindung betrifft eine elektrische Maschine mit einem Wicklungsträger, der mehrere Nuten aufweist und wenigstens eine Wicklung trägt, wobei die Wicklung durch einen jeweiligen Leiter gebildet ist, der mehrere Nutabschnitte aufweist, die jeweils durch eine der Nuten des Wicklungsträgers geführt und durch Verbindungsabschnitte des Leiters, die außerhalb der Nuten liegen, leitend verbunden sind. Daneben betrifft die Erfindung ein Kraftfahrzeug sowie ein Verfahren zur Herstellung wenigstens einer Wicklung für eine elektrische Maschine.

In elektrischen Maschinen, also beispielsweise in Motoren oder Generatoren, wird typischerweise ein Stator mit daran angebrachten Spulen genutzt, um durch eine zeitlich veränderliche Bestromung der Spulen einen Rotor anzutreiben oder ein aufgrund einer Rotation auftretendes zeitlich veränderliches Magnetfeld in einen Induktionsstrom umzusetzen. Hierbei kann beispielsweise ein zylinderartig geformter Wicklungsträger genutzt werden, der eine Vielzahl von in Axialrichtung verlaufenden Nuten aufweist, durch die ein die Spulen bildender Leiter geführt ist. Prinzipiell ist es möglich, um jeden der die Nuten begrenzende Spulenzähne separate Wicklungen zu winden. Es kann jedoch vorteilhaft sein, einen zusammenhängenden Leiter mäandernd durch mehrere Nuten zu führen, wie dies beispielsweise aus der Druckschrift EP 1 708 338 A1 bekannt ist. Auch aus US 2005/248229 A1 ist eine ähnliche Maschine bekannt.

Bei elektrischen Maschinen mit hoher Leistungsdichte, beispielsweise bei Antriebsmaschinen für Kraftfahrzeuge, wird mittlerweile häufig eine sogenannte Hairpin-Bauweise genutzt, um derartige durch Nuten mäandernde Windungen zu fertigen. Hierbei wird ein Profildraht, meist ein Rechteckdraht, zunächst in eine U-Form, also in die Form einer Haarnadel bzw. eines "Hairpin", gebogen. Die Schenkel dieses Hairpins werden anschließend kreisförmig angeordnet und in die Nuten eines Statorblechpakets eingesetzt. Die freien Enden der jeweiligen Hairpins werden im nächsten Schritt konzentrisch zur Statorachse bzw. zur Drehachse der elektrischen Maschine um einen definierten Winkel verdreht. Hierbei werden alle Enden, die auf einem jeweiligen Durchmesser, das heißt, auf einer bestimmten Lage in den Nuten, liegen, abwechselnd im und gegen den Uhrzeigersinn verdreht. Dies wird auch als "Twisten" bezeichnet. Die nebeneinander liegenden Enden werden miteinander verschweißt. Je nach Wicklungsschema werden Verschaltbrücken auf den Wicklungskopf aufgesetzt und mit entsprechenden Enden von Hairpins verschweißt, um die Hairpins zu einer Gesamtwicklung zu verschalten. Gegebenenfalls werden die Pinenden anschließend isoliert und der gesamte Stator imprägniert. Diese Technik ermöglicht eine hohe Automatisierung und einen hohen Kupferfüllfaktor in den Statornuten, also ein hohes Verhältnis zwischen Kupferfläche und Nutfläche.

Bei dem beschriebenen Vorgehen kann es problematisch sein, dass eine solche Statorherstellung relativ unflexibel ist. Sollen verschiedene elektrische Maschinen, beispielsweise für verschiedene Motorklassen, gefertigt werden, muss typischerweise für jede der Elektromaschinenarten eine komplette eigene Fertigung mit speziell hierfür hergestellten Wicklungsträgern, also insbesondere Blechpaketen, und Hairpins aufgebaut werden. Ein Baukastenansatz, bei dem zumindest Teile der Fertigungsstrecke für mehrere Motorklassen verwendet werden können, ist typsicherweise kaum implementierbar.

Zudem resultieren bei einem Aufbau von Elektromaschinen in Hairpin-Bauweise viele Kreuzungsstellen zwischen Leiterabschnitten verschiedener Phasen im Wickelkopf. Dies kann bei Elektromaschinen mit hohen Zwischenkreisspannungen zu einer starken Belastung der elektrischen Isolation der Leiter führen.

Der Erfindung liegt somit die Aufgabe zugrunde, eine elektrische Maschine anzugeben, die hochautomatisiert, insbesondere in der eingangs erläuterten Hairpin-Technik, gefertigt werden kann, wobei zugleich die genannten Nachteile vermieden werden können.

Die Aufgabe wird erfindungsgemäß durch eine elektrische Maschine der eingangs genannten Art gelöst, wobei bei einem Stromfluss durch den jeweiligen Leiter von einem ersten Anschlusspunkt zu einem zweiten Anschlusspunkt der jeweiligen Wicklung der Strom in allen Verbindungsabschnitten, die in einem mehrere Verbindungsabschnitte umfassenden ersten Leiterabschnitt dieses Leiters liegen, mit einem ersten Umlaufsinn und in allen Verbindungsabschnitten, die in einem zweiten mehrere Verbindungsabschnitte umfassenden Leiterabschnitt dieses Leiters liegen, mit einem zum ersten Umlaufsinn entgegengesetzten zweiten Umlaufsinn um eine Drehachse der elektrischen Maschine geführt wird.

Es wird somit vorgeschlagen, die Stromführung in Umfangsrichtung des Wicklungsträgers zumindest einmalig umzukehren. Bei einer Verfolgung des Leiters ausgehend von dem ersten Anschlusspunkt erstreckt sich der Leiter somit in den Verbindungsabschnitten im ersten und zweiten Leiterabschnitt mit zueinander entgegengesetztem Umlaufsinn. Wie später noch genauer erläutert werden wird, kann durch eine derartige Führung des Leiters der Wicklung erreicht werden, dass die Lage der Anschlusspunkte an dem Wicklungsträger weitgehend frei gewählt werden kann. Dies kann zum einen dazu genutzt werden, durch eine Gruppierung der Anschlusspunkte verschiedener Wicklungen bzw. verschiedener Phasen der elektrischen Maschine eine Kontaktierung der Wicklungen mit geringerem Aufwand zu erreichen. Zum anderen kann durch entsprechende Positionierung der Anschlusspunkte bzw. Wahl des Umlaufsinns für Wicklungen verschiedener Phasen erreicht werden, dass der Spannungsabfall an Kreuzungsstellen zwischen Wicklungen verschiedener Phasen reduziert werden kann. Der beschriebene Aufbau kann es zudem ermöglichen, den gleichen Wicklungsträger für verschiedene Maschinentypen zu nutzen, also beispielsweise für elektrische Maschinen, die eine unterschiedliche Zahl von parallelen Wicklungen pro Phase nutzen oder Maschinen mit und ohne Sehnung der Wicklungen.

Die elektrische Maschine weist vorzugsweise mehrere Wicklungen auf. Hierbei können die einzelnen Wicklungen bzw. Gruppen der Wicklungen jeweils verschiedenen Phasen der elektrischen Maschine zugeordnet werden. Beispielsweise können für eine Bestromung der elektrischen Maschine mit Drehstrom Wicklungen für drei Phasen genutzt werden. Hierbei kann es vorteilhaft sein, für jede Phase mehrere parallel geschaltete Wicklungen, beispielsweise zwei oder drei Wicklungen, zu nutzen. Die einzelnen Wicklungen bzw. wenigstens eine der Wicklungen kann mehrere erste und/oder zweite Leiterabschnitt umfassen, das heißt der Umlaufsinn des Stroms in den Verbindungsabschnitten kann sich mehrmals ändern. Besonders bevorzugt kann sich der Umlaufsinn des Stroms genau einmal oder genau zweimal innerhalb der jeweiligen Wicklung ändern, was einen besonders einfachen Aufbau der Wicklungen ermöglicht.

Der erste und/oder der zweite Leiterabschnitt können durch die Nuten des Wicklungsträgers mäandernd wenigstens einmal in Umfangsrichtung um die Drehachse geführt sein. Vorzugsweise werden der erste und/oder der zweite Leiterabschnitt auf diese Weise mehrfach um die Drehachse geführt, wobei dies dazu führen kann, dass in den einzelnen Nuten Nutabschnitt der gleichen Wicklung oder von verschiedenen Wicklungen, insbesondere von verschiedenen Wicklungen der gleichen Phase, einen Stapel bilden.

In den Nuten kann jeweils ein Stapel aus mehreren in Radialrichtung gestapelten Nutabschnitten angeordnet sein, wobei sich der erste und/oder der zweite Leiterabschnitt eines jeweiligen Leiters zumindest von einem radial äußersten Nutabschnitt eines Stapels zu einem radial innersten Nutabschnitt des oder eines weiteren Stapels erstrecken. Die einzelnen Stapel können Nutabschnitte nur eines Leiters aber auch von Leitern verschiedener Wicklungen umfassen. Der erste bzw. zweite Leiterabschnitt können beispielsweise mehrfach um die Drehachse geführt sein und ihre Nutabschnitte können sich hierbei von dem radial äußersten Nutabschnitt tendenziell zu weiter radial innen liegenden Nutabschnitten der weiteren Stapel bewegen, sodass nach einer oder mehrerer Führungen des ersten bzw. zweiten Leiterabschnitts um die Drehachse eine Position an der innersten Position eines Stapels erreicht wird.

Insbesondere kann der Übergang von dem ersten Leiterabschnitt zu dem zweiten Leiterabschnitt an einem radial äußersten Nutabschnitt eines Stapels oder an einem radial innersten Nutabschnitt eines Stapels erfolgen. Wie später noch erläutert wird, ist dort eine Umkehrung des Umlaufsinns des Stroms bzw. der Erstreckung des Leiters besonders einfach möglich.

Der Leiter weist erfindungsgemäß wenigstens einen Nutabschnitt auf, der als Umkehrnutabschnitt über zwei Verbindungsabschnitte mit den weiteren Nutabschnitten des Leiters verbunden ist, die von dem jeweiligen Umkehrnutabschnitt ausgehend in die gleiche Richtung in Umfangsrichtung des Wicklungsträgers geführt sind. In Umfangsrichtung des Wicklungsträgers können abwechselnd Nuten und die Nuten trennende Abschnitte des Wicklungsträgers, beispielweise Statorzähne, angeordnet sein. Da sich die unmittelbar an dem Umkehrnutabschnitt angrenzenden Verbindungsabschnitte in die gleiche Richtung in Umfangsrichtung des Wicklungsträgers erstrecken kehrt sich der Umlaufsinn eines durch den Leiter geführten Stroms zwischen diesen Verbindungsabschnitten um. Somit kann einer der zwei Verbindungsabschnitte Teil des ersten Leiterabschnitts und der andere der beiden Verbindungsabschnitte Teil des zweiten Leiterabschnitts sein.

In den Nuten kann jeweils ein Stapel aus mehreren in Radialrichtung gestapelten Nutabschnitten angeordnet sein, wobei der Umkehrnutabschnitt der radial äußerste Nutabschnitt eines der Stapel ist und einer der Verbindungsabschnitte, die den Umkehrnutabschnitt mit den weiteren Nutabschnitten des Leiters verbinden, in Radialrichtung nach außen geführt ist, oder wobei der Umkehrabschnitt der radial innerste Nutabschnitt eines der Stapel ist und einer der Verbindungsabschnitte, die den Umkehrnutabschnitt mit den weiteren Nutabschnitten des Leiters verbinden, in Radialrichtung nach innen geführt ist. Der nach außen bzw. nach innen geführte Verbindungabschnitt kann insbesondere innenseitig bzw. außenseitig an dem Stapel der Nutabschnitte wenigstens einer benachbarten Nut bzw. an den mit diesen Nutabschnitten verbundenen Verbindungsabschnitten vorbeigeführt werden. Das beschriebene Vorgehen ist insbesondere vorteilhaft, wenn die eingangs erläuterte Hairpin-Technik verwendet, wird um die Wicklung bzw. die Wicklungen der elektrischen Maschine aufzubauen. Bei dieser werden, wie erläutert, typischerweise alle freien Enden von Leiterklammern, die auf dem gleichen Radius zum Liegen kommen, in die gleiche Richtung gebogen bzw. getwistet, um sie mit freien Enden auf einem benachbarten Radius zu verbinden. Der nach innen bzw. nach außen geführte Verbindungsabschnitt des Umkehrnutabschnitts kann durch ein solches freies Ende eines Hairpins gebildet werden, der somit auf einen anderen Radius geführt wird und somit problemlos in eine andere Richtung als die weiteren freien Enden auf dem Radius des Umkehrnutabschnitts geführt werden kann, um eine Umkehrung der Leiterführung bzw. des Stromflusses zu erreichen.

Es können in einer Windung auch zwei Umkehrnutabschnitte vorgesehen sein, von denen einer ein radial äußerster Nutabschnitt eines Stapels ist und einer ein radial innerster Nutabschnitt des oder eines weiteren Stapels. In diesem Fall kann der Verbindungsabschnitt des radial innersten Umkehrnutabschnitts nach innen und der des radial äußersten Umkehrnutabschnitts nach außen geführt werden.

Abgesehen von einem oder zwei Umkehrnutabschnitten des jeweiligen Leiters und Nutabschnitten des Leiters, die zu den Anschlusspunkten benachbart sind, können alle Nutabschnitte des Leiters über zwei Verbindungsabschnitte mit den weiteren Nutabschnitten des Leiters verbunden sein, die von dem jeweiligen Nutabschnitt ausgehend in zueinander entgegengesetzte Richtungen in Umfangsrichtung geführt sind. Somit wird mit einfachen Mitteln eine mäandernde Führung des ersten bzw. zweiten Leiterabschnitts durch die Nuten mit einem jeweiligen Umlaufsinn in Umfangsrichtung realisiert.

Der jeweilige Leiter ist erfindungsgemäß durch mehrere miteinander verbundene Leiterklammern gebildet, die jeweils zwei der Nutabschnitte und einen die Nutabschnitte verbindenden Kopplungsabschnitt ausbilden, wobei der Kopplungsabschnitt einen ersten Verbindungsabschnitt für diese Nutabschnitte bildet, wobei ein jeweiliger zweiter Verbindungsabschnitt durch ein jeweiliges freies Ende der Leiterklammer gebildet wird, das in eine Richtung in Umfangsrichtung des Wicklungsträgers gebogen und mit einem freien Ende einer weiteren Leiterklammer leitend verbunden ist. Ist einer der Nutabschnitt der Umkehrabschnitt, so wird das freie Ende insbesondere wie oben erläutert zusätzlich in Radialrichtung gebogen, um radial innerhalb und außerhalb der Verbindungsabschnitte, die Nutabschnitte wenigstens einer weiteren Nut kontaktieren, vorbeigeführt zu werden. Die erfindungsgemäße elektrische Maschine kann somit durch ein Verfahren hergestellt werden, das weitgehend der bekannten Hairpin-Technik entspricht, wobei durch die Verschaltung der Leiterklammern miteinander, insbesondere durch die Nutzung der vorangehend beschriebenen Umkehrnutabschnitte, der Umlaufsinn des Stroms innerhalb der Wicklung umgekehrt wird. Daher kann eine erfindungsgemäße elektrische Maschine relativ einfach hergestellt werden, indem ein bekanntes Herstellungsverfahren entsprechend abgeändert wird.

Es ist möglich, dass alle Nutabschnitte durch die obig erläuterten Leiterklammern gebildet werden. Es ist jedoch auch möglich, dass einzelne Nutabschnitte auf andere Weise, beispielsweise durch im Wesentlichen gerade Leiterabschnitte, die den jeweiligen Nutabschnitt und freie Enden ausbilden, gebildet werden. Entsprechende gerade Leiterabschnitte, die im Rahmen des Aufbaus einer Steckspule genutzt werden, werden auch S-PINs genannt, da sie nach einem Twisten der freien Enden eine S-Form aufweisen. Derartige, bei der Einführung im Wesentlichen gerade Leiterabschnitte können beispielweise genutzt werden, um eine Kontaktierung auf eine von den freien Enden der Leiterklammern abgewandte Seite des Wicklungsträgers zu verlegen.

In den Nuten ist erfindungsgemäß jeweils der oder ein Stapel aus mehreren in Radialrichtung gestapelten Nutabschnitten angeordnet, wobei, abgesehen von einem oder zwei Umkehrnutabschnitten des jeweiligen Leiters, die freien Enden der Leiterklammern, die Nutabschnitte, die in der gleichen radialen Position in den Stapeln angeordnet sind, verlängern, in die gleiche Richtung in Umfangsrichtung gebogen sind. Somit kann ein Twisten bzw. Biegen der freien Enden der Leiterklammern relativ einfach implementiert werden, da alle auf einem bestimmten Radius liegenden freien Enden in die gleiche Richtung in Umfangsrichtung gebogen werden.

Der Wicklungsträger kann eine erste Wicklung einer ersten Phase der elektrischen Maschine und eine zweite Wicklung einer zweiten Phase der elektrischen Maschine tragen, wobei jene Nutabschnitte, an denen der erste und/oder der zweite Anschlusspunkt der ersten Wicklung ausgebildet ist, bezüglich der Drehachse der elektrischen Maschine auf einem anderen Radius angeordnet sind, als jene Nutabschnitte an denen der erste und/oder der zweite Anschlusspunkt der zweiten Wicklung ausgebildet ist. Im Rahmen der Erfindung wurde erkannt, dass hohe Spannungen zwischen sich kreuzenden Leitern verschiedener Phasen nur für relativ wenige Windungen bzw. Nutdurchführungen der jeweiligen Wicklung auftreten. Speziell in den ersten Windungen nach einem Anschlusspunkt ist mit Spannungsspitzen bzw. Spannungsüberhöhungen zu rechnen. Durch eine Anordnung der Anschlusspunkte der Wicklungen verschiedener Phasen auf verschiedenen Radien kann erreicht werden, dass Kreuzungsstellen, an denen sich Leiter verschiedener elektrischer Phasen im Wickelkopf kreuzen, zumindest von den Anschlusspunkten einer der Wicklungen bzw. einer der Phasen entlang dem Leiter beabstandet sind, sodass insgesamt die zwischen den Leitern an Kreuzungspunkten maximal abfallende Spannung reduziert werden kann.

Der Wicklungsträger kann insbesondere Wicklungen für drei Phasen aufweisen, wobei die Anschlusspunkte der verschiedenen Phasen auf verschiedenen Radien angeordnet sein können. Es ist auch möglich, dass der Wicklungsträger mehrere Wicklungen pro Phase trägt. Da die Anschlusspunkte der Wicklungen für die gleiche Phase näherungsweise auf dem gleichen Spannungsniveau liegen, können die Anschlusspunkte mehrerer Wicklungen der gleichen Phase auf dem gleichen Radius, bzw. radial wenig beabstandet angeordnet sein.

Wie bereits erläutert, ermöglicht es die Stromführung mit unterschiedlichem Umlaufsinnen innerhalb der gleichen Wicklung, dass Anschlusspunkte für eine Wicklung prinzipiell an einer beliebigen Stelle der Wicklung angeordnet werden können. Hierdurch kann die vorangehend erläuterten radiale Beabstandung der Anschlusspunkte von Wicklungen unterschiedlicher Phasen und somit eine Verringerung der Belastung der Isolation der Leiter leicht umgesetzt werden.

Um eine Kontaktierung der Wicklungen zu erleichtern kann es vorteilhaft sein, wenn die Anschlusspunkte zumindest der Wicklungen der gleichen Phase, insbesondere jedoch die Anschlusspunkte der Wicklungen aller Phasen, in Umfangsrichtung des Wicklungsträgers betrachtet relativ nahe beieinander liegen. Beispielsweise können alle Anschlusspunkte in einem Winkelsegment von weniger als 90°, weniger als 45° oder weniger als 30° angeordnet sein. Durch die obig erläuterte radiale Beabstandung von Anschlusspunkten der verschiedenen Phasen kann dennoch eine geringe Belastung der Isolation der Leiter der Wicklungen erreicht werden.

Der Wicklungsträger kann die oder eine erste Wicklung der oder einer ersten Phase der elektrischen Maschine und die oder eine zweite Wicklung der oder einer zweiten Phase der elektrischen Maschine tragen, wobei bei einem Stromfluss durch den jeweiligen Leiter von dem ersten Anschlusspunkt zu dem zweiten Anschlusspunkt der jeweiligen Wicklung der Strom in den Verbindungsabschnitten eines ersten Anschlussabschnitts des Leiters der ersten Wicklung, der den ersten Anschlusspunkt der ersten Wicklung umfasst, mit einem Umlaufsinn um die Drehachse der elektrischen Maschine geführt wird, der zu dem Umlaufsinn entgegengesetzt ist, mit dem der Strom in den Verbindungsabschnitten eines zweiten Anschlussabschnitts des Leiters der zweiten Wicklung, der den ersten Anschlusspunkt der zweiten Wicklung umfasst, geführt wird. Der Strom bzw. der jeweilige Leiter wird somit für die erste und zweite Wicklung ausgehend vom jeweiligen Anschlusspunkt zunächst mit unterschiedlichem Umlaufsinn um die Drehachse der elektrischen Maschine geführt. Hierdurch kann vorteilhaft eine an Kreuzungspunkten, an denen sich die Leiter dieser Wicklungen im Wickelkopf kreuzen, abfallende Spannung reduziert werden. So ist es beispielsweise möglich, dass sich die Leiter der Wicklungen aufgrund des entgegengesetzten Umlaufsinns erst kreuzen, nachdem jeder der Leiter über einen Winkel von ungefähr 180° um die Drehachse der elektrischen Maschine geführt wurde. Somit ist der erste Kreuzungspunkt der Leiter relativ weit von den jeweiligen Anschlusspunkten entfernt, sodass wie obig beschrieben geringere Spannungsdifferenzen zwischen den Leitern an diesem Kreuzungspunkt erwartet werden als in dem Fall, wenn dieser Kreuzungspunkt näher an den Anschlusspunkten liegen würde. Wicklungen der gleichen Phase werden vorzugsweise mit gleichem Umlaufsinn ausgehend vom Anschlusspunkt um die Drehachse geführt. Wird eine elektrische Maschine mit drei Phasen genutzt, kann der Drehsinn, mit dem die Wicklung um die Drehachse geführt wird, für eine dieser Phasen umgekehrt sein als für die beiden anderen Phasen.

Neben der erfindungsgemäßen elektrischen Maschine betrifft die Erfindung ein Kraftfahrzeug, dass eine erfindungsgemäße elektrische Maschine umfasst. Die elektrische Maschine kann insbesondere ein Antriebsmotor des Kraftfahrzeugs sein.

Zudem betrifft die Erfindung ein Verfahren zur Herstellung wenigstens einer Wicklung einer elektrischen Maschine, dass die folgende Schnitte umfasst:
- Bereitstellen eines Wicklungsträgers und mehrerer Leiterklammern, die jeweils aus einem klammerförmigen Leiterabschnitt gebildet sind,
- Axiales Einschieben der Leiterklammern in den Wicklungsträger derart, dass zwei Nutabschnitte jeder Leiterklammer in einer jeweiligen Nut des Wicklungsträgers verlaufen, und
- Biegen der freien Enden der Leiterklammern in eine jeweilige Richtung in Umfangsrichtung des Wicklungsträgers und Verbinden mit einem freien Ende einer jeweiligen weiteren Leiterklammer zur Ausbildung des Leiters aus den Leiterabschnitten, wobei ein freies Ende wenigstens einer Leiterklammer in die gleiche Richtung in Umfangsrichtung des Wicklungsträgers gebogen wird, in die sich auch ein die Nutabschnitte dieser Leiterklammer verbindender Kopplungsabschnitt erstreckt.

Durch das beschriebene Verfahren kann insbesondere eine erfindungsgemäße elektrische Maschine hergestellt werden. Jener Nutabschnitt jener Leitklammer, der über das freie Ende und den Verbindungsabschnitt kontaktiert ist, die in die gleiche Richtung in Umfangsrichtung gebogen werden, bildet einen Umkehrnutabschnitt, an dem sich der Umlaufsinn des Stroms um die Drehachse der elektrischen Maschine ändert. Er kann somit den Übergang zwischen den obig erläuterten ersten und zweiten Leiterabschnitten des Leiters bilden. Durch diese Umkehr der Strom- bzw. Leiterführung der Wicklung werden die oben bereits zur erfindungsgemäßen elektrischen Maschine erläuterten Vorteile erreicht. Das Verfahren kann mit Verfahrensschritten und Merkmalen weitergebildet werden, die erforderlich sind, um einzelne Merkmale der erfindungsgemäßen elektrischen Maschine zu realisieren.

Für die Leiterklammern einer Wicklung kann abgesehen von einer oder von zwei Leiterklammern, vorgesehen sein, dass die freien Enden jeweils entgegen der Richtung des Verbindungsabschnitts in Umfangsrichtung des Wicklungsträgers gebogen werden, um den Leiter in Umfangsrichtung mäandernd durch die Nuten des Wicklungsträgers zu führen. Die Leiterklammern können insbesondere derart in den Wicklungsträger eingeschoben werden, dass die Nutabschnitte in den Nuten gestapelt sind und somit auf verschiedenen Radien angeordnet sind. Die freien Enden, die nicht in die gleiche Richtung wie die Verbindungsabschnitte gebogen werden sollen, können auf dem gleichen Radius verbleiben, in dem sich auch der an sie angrenzende Nutabschnitt befindet. Jene freien Enden, die in die gleiche Richtung wie der Verbindungsabschnitt gebogen werden sollen, können nach außen oder innen aus dem Bereich, indem sich die weiteren freien Abschnitte befinden, auf einen separaten Radius geführt werden. Anschließend können alle auf einem Radius befindlichen freien Enden in die gleiche Richtung gebogen bzw. getwistet werden.

Die freien Enden der Leiterklammern einer Wicklung können zunächst derart miteinander verbunden werden, dass eine geschlossene Leiterschleife resultiert. Danach kann die Verbindung zwischen zwei freien Enden getrennt werden oder ein Kopplungsabschnitt einer der Leiterklammern kann getrennt werden, um einen ersten und einen zweiten Anschlusspunkt der Wicklung auszubilden. Eine derartiges Vorgehen ermöglicht es, die Positionen der Anschlusspunkte im Wesentlichen frei zu wählen. Hierdurch kann beispielsweise erreicht werden, dass die Anschlusspunkte aller Wicklungen in einem bestimmten Umfangssegment gruppiert werden und/oder dass Anschlusspunkte verschiedener Phasen auf verschiedene Radien verlegt werden, wie bereits zur elektrischen Maschine erläutert wurde.

Weitere Vorteile und Einzelheiten der Erfindung ergeben sich aus den folgenden Ausführungsbeispielen sowie den zugehörigen Zeichnungen. Hierbei zeigen schematisch:
- Fig. 1: eine geschnittene Detailansicht eines Ausführungsbeispiels einer erfindungsgemäßen elektrischen Maschine, deren Wicklungen durch ein Ausführungsbeispiel des erfindungsgemäßen Verfahrens herstellbar sind,
- Fig. 2: die Form und Verbindung der freien Enden der in Fig. 1 zur Ausbildung der Wicklung genutzten Leiterklammern,
- Fig. 3 und 4: die Führung des Leiters in Umfangsrichtung der elektrischen Maschine in einem Ausführungsbeispiel der erfindungsgemäßen elektrischen Maschine,
- Fig. 5 bis 7: verschiedene Anordnungsmöglichkeiten für Anschlusspunkte der Wicklungen verschiedener Phasen in verschiedenen Ausführungsbeispielen der erfindungsgemäßen elektrischen Maschine,
- Fig. 8 bis 15: Wickelschemata für Wicklungen verschiedener Ausführungsbeispiele der erfindungsgemäßen elektrischen Maschine, und
- Fig. 16: ein Ausführungsbeispiel eines erfindungsgemäßen Kraftfahrzeugs.

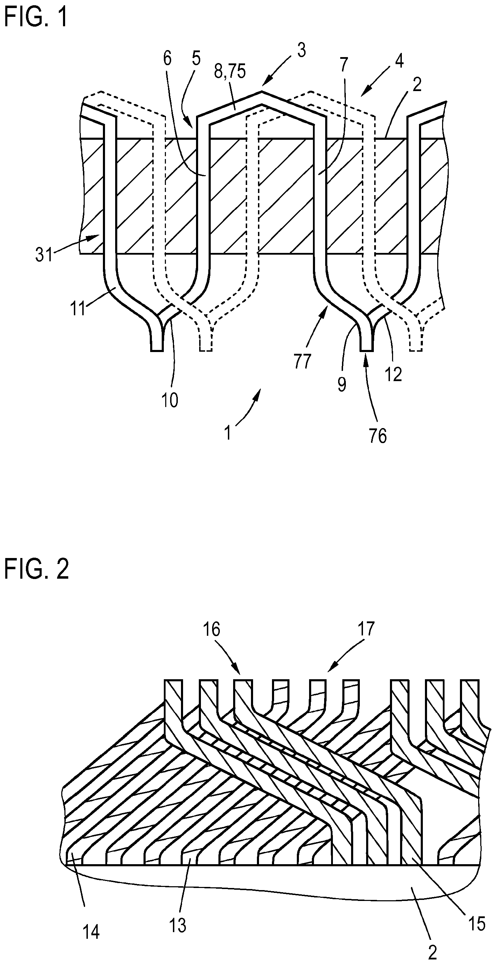

Fig. 1 zeigt eine Detailansicht eines Stators 1 einer elektrischen Maschine. Der Stator umfasst einen Statorträger 2 mit mehreren Nuten 31, der mehrere Wicklungen 3, 4 trägt. Aus Übersichtlichkeitsgründen sind in Fig. 1 nur zwei Wicklungen 3, 4 für eine jeweilige Phase dargestellt.

Die Wicklungen 3, 4 sind im gezeigten Ausführungsbeispiel durch ein sogenanntes Hairpin-Verfahren hergestellt, bei dem der Leiter 77 der Wicklungen 3, 4 jeweils durch leitend miteinander verbundene, beispielsweise miteinander verschweißte, Leiterklammern 5 gebildet wird. Die Leiterklammern 5 weisen jeweils zwei Nutabschnitte 6, 7 und einen die Nutabschnitte verbindenden Kopplungsabschnitt 8 auf. Die die Nutabschnitte 6, 7 verlängernden freien Enden 9, 10 der Leiterklammern 5 verlängern die Nutabschnitte 6, 7 zunächst anders als in Fig. 1 dargestellt geradlinig und werden erst später gebogen.

Die Leiterklammern 5 der Wicklungen 3, 4 werden ringförmig angeordnet und anschließend axial, also in Hochrichtung in Fig. 1, in den Wicklungsträger 2 eingeführt, der eine zylinderartige Form aufweist, die in Fig. 1 aufgerollt dargestellt ist. Die Leiterklammern 5 werden hierbei soweit eingeführt, dass die Nutabschnitte 6, 7 in den Nuten 31 angeordnet sind und die freien Enden 9, 10 auf der von dem Kopplungsabschnitt 8 abgewandten Seite des Wicklungsträgers 2 über diesen hinausragen.

In Fig. 1 ist dies aus Übersichtlichkeitsgründen nur für zwei Wicklungen 3, 4 zweier Phasen dargestellt. Typischerweise werden mehrere Wicklungen pro Phase genutzt und es werden Wicklungen für drei Phasen vorgesehen. In den Nuten 31 resultiert hierbei jeweils ein Stapel aus mehreren Nutabschnitten 6, 7. Die Nutabschnitte 6, 7 kommen somit in unterschiedlichen Ebenen senkrecht zur Bildfläche, das heißt in unterschiedlichen radialen Abständen zu einer Drehachse der elektrischen Maschine zum Liegen. Die freien Enden 9,10 kommen jeweils in der gleichen Ebene bzw. im gleichen radialen Abstand zur Drehachse zum Liegen, wie der jeweilige Nutabschnitt 6, 7, den sie verlängern. Da die Nutabschnitte 6, 7 einer jeweiligen Leiterklammer 5 typischerweise in verschiedenen Ebenen zum Liegen kommen, erstreckt sich der Kopplungsabschnitt schräg zur Bildebene in Fig. 1.

Um die Leiterklammern 5 bzw. die Nutabschnitte 6, 7 zu einem durchgehenden Leiter der Wicklung zu verbinden, werden die freien Enden 9, 10 gebogen. Dieser Biegevorgang wird auch als Twisten bezeichnet. Hierbei werden alle freien Enden, die auf dem gleichen Radius, das heißt im gleichen radialen Abstand zu der Drehachse der elektrischen Maschine bzw. in der gleichen Ebene senkrecht zur Bildebene in Fig. 1 liegen, in die gleiche Richtung gebogen. Somit werden beispielsweise die freien Enden 9, 11 nach rechts gebogen und die in Fig. 1 weiter vom Betrachter entfernt liegenden freien Enden 10, 12 nach links. Somit sind die freien Enden 10, 11 und 9, 12 unmittelbar benachbart zueinander und können leitend verbunden, beispielsweise verschweißt, werden.

Würde die Verbindung der Leiterklammern 5 zum Leiter 77 für alle Leiterklammern wie erläutert durchgeführt, so würde ein Leiter 77 resultieren, der sich über die gesamte Länge des Leiters 77 mäandernd in die Umfangsrichtung des Wicklungsträgers 2 durch die Nuten 31 des Wicklungsträgers 2 erstreckt.

Es wurde jedoch erkannt, dass es vorteilhaft sein kann, den Leiter 77 derart auszubilden, dass bei einem Stromfluss durch den Leiter 77 von einem ersten Anschlusspunkt zu einem zweiten Anschlusspunkt der jeweiligen Wicklung 3, 4 der Strom in den durch die Kopplungsabschnitte 8, bzw. die freien Enden 10 und 11 bzw. 9 und 12 gebildeten Verbindungsabschnitten 75, 76, die in einem ersten Leiterabschnitt dieses Leiters 77 liegen mit einem ersten Umlaufsinn und in allen Verbindungsabschnitten 75, 76, die in einem zweiten Leiterabschnitt dieses Leiters 77 liegen, mit einem zum ersten Umlaufsinn entgegengesetzten zweiten Umlaufsinn um eine Drehachse der elektrischen Maschine geführt wird.

Eine Möglichkeit dies mit einer geringfügigen Modifikation des vorangehend beschriebenen Vorgehens zu erreichen, wird im Folgenden mit Bezug auf Fig. 2 erläutert. Fig. 2 zeigt ausschließlich freie Enden 13, 14, 15, die Nutabschnitte verlängern, die in den oben beschriebenen Stapeln von Nutabschnitten 6, 7 radial bezüglich der Drehachse der elektrischen Maschine am äußeren Rand des jeweiligen Stapels liegen. Hierbei sind ein Großteil der freien Enden 13, 14, wie zu Fig. 1 erläutert, in die gleiche Richtung gebogen, da die zugehörigen Nutabschnitte auf dem gleichen Radius liegen. Die freien Enden 13, 14 und der jeweilige nicht dargestellte Kopplungsabschnitte 8 der zugehörigen Leiterklammer erstrecken sich somit in Umfangsrichtung in unterschiedliche Richtungen, was zu einer durch die Nuten 31 mäandernden Stromführung führt. Beispielsweise ist das freie Ende 13 am Punkt 17 mit einem nicht gezeigten weiteren freien Ende einer weiteren Leiterklammer verbunden, wobei der zugehörige Nutabschnitt dieses weiteren freien Endes auf einer radial weiter innen liegenden, also in Fig. 2 weiter vom Betrachter entfernten, Stapelebene liegt, womit das weitere freie Ende in Fig. 2 nach links gekrümmt wäre und somit mit dem freien Ende 13 eine Verbindung eingeht, wie es in Fig. 1 für die freien Enden 10, 11 bzw. 9, 12 dargestellt ist.

Die freien Enden 15 sind hingegen derart gebogen, dass sie zunächst radial nach außen, also in Fig. 2 auf den Betrachter zu, geführt werden, und anschließend, auf einem separaten Radius außerhalb der Nutenstapel bzw. der weiteren Verbindungsabschnitte 13, 14 nach links gebogen, um die freien Enden 14 zu kontaktieren und somit einen jeweiligen Umkehrpunkt 16 für die jeweilige Wicklung auszubilden. Besonders bevorzugt kann für eine jeweilige Wicklung neben dem beschriebenen äußeren Umkehrpunkt 16 auch noch ein weiterer Umkehrpunkt vorgesehen sein, der durch ein freies Ende gebildet wird, das einen Nutabschnitt verlängert, der radial an einem innenseitigen Rand eines der Stapel liegt.

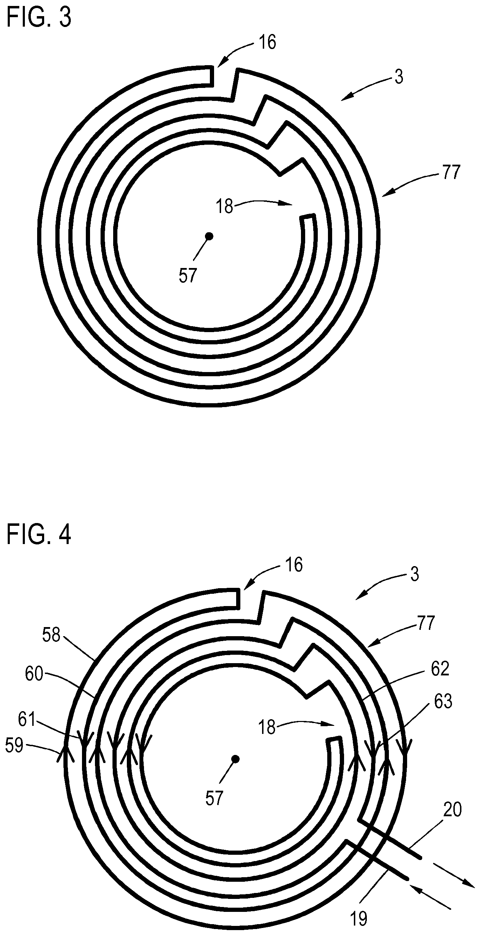

Die resultierende Führung des Leiters 77, wenn sowohl der äußere Umkehrpunkt 16 als auch der innere Umkehrpunkt 18 implementiert werden und alle verbleibenden freien Enden wie zu Fig. 1 erläutert verbunden werden, ist schematisch in Fig. 3 für die Wicklung 3 dargestellt. Hierbei ist zu erkennen, dass der Leiter 77 zu einer Leiterschleife geformt ist, wobei diese mehrfach um eine Drehachse 57 der elektrischen Maschine verläuft.

Wie in Fig. 4 dargestellt ist, können an nahezu beliebigen Stellen dieser Leiterschleife Anschlusspunkte 19, 20 vorgesehen werden, um die Wicklung 3 zu kontaktieren. Die Anschlusspunkte 19, 20 können entweder dadurch ausgebildet werden, dass für zwei der freien Enden 9 bis 12 eine leitende Verbindung unterbleibt oder dass ein Kopplungsabschnitt 8 an einer der Leiterklammern 5 aufgetrennt wird. Wie später noch genauer erläutert werden wird, kann durch eine entsprechende Wahl der Position der Anschlusspunkte 19, 20 in Umfangsrichtung und in Radialrichtung einerseits eine Gruppierung der Anschlusspunkte 19, 20 verschiedener Wicklungen 3, 4 und/oder verschiedener Phasen erreicht werden. Andererseits können die Anschlusspunkte 19, 20 von Wicklungen verschiedener Phasen derart angeordnet werden, dass keine allzu großen Spannungen an sich kreuzenden Leitern 77 verschiedener Phasen auftreten.

Wie in Fig. 4 dargestellt ist, wird bei der gezeigten Anordnung der Anschlusspunkte 19, 20 erreicht, dass bei einem Stromfluss durch den Leiter 77 von dem ersten Anschlusspunkt 19 zu dem zweiten Anschlusspunkt 20 der Strom zunächst in einem ersten Leiterabschnitt 58 mit einem ersten Umlaufsinn 59, nämlich im Uhrzeigersinn, um die Drehachse 57 der elektrischen Maschine geführt wird. Nach Erreichen des Umkehrpunkts 16 wird der Strom durch einen zweiten Leiterabschnitt 60 mit einem zweiten Umlaufsinn 61, nämlich gegen den Uhrzeigersinn, um die Drehachse 57 der elektrischen Maschine zu dem zweiten Umkehrpunkt 18 geführt, um anschließend in einem dritten Leiterabschnitt 62 wiederum mit dem ersten Umlaufsinn 63, nämlich im Uhrzeigersinn, um die Drehachse 57 geführt zu werden. Hierbei wird der Strom in allen drei Leiterabschnitten 58, 60, 62 mäandernd durch die nicht gezeigten Nuten des Wicklungsträgers geführt, wobei er wenigstens einmal in Umfangsrichtung um die Drehachse 57 geführt wird.

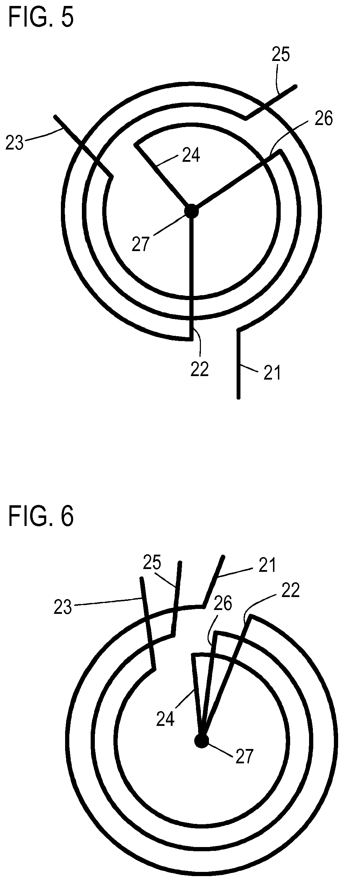

Wie erläutert ermöglicht es der beschriebene Aufbau der elektrischen Maschine, dass die Position der Anschlusspunkte 19, 20 an der jeweiligen Wicklung 3, 4 in Umfangs- und Radialrichtung im Wesentlichen frei gewählt werden kann. Die Figuren 5 bis 7 zeigen verschiedene Beispiele dafür, wie die Anschlusspunkte von Wicklungen verschiedener Phasen im Umfangsrichtung des Wicklungsträgers 2 verteilt werden können. Aus Übersichtlichkeitsgründen zeigen diese Figuren jeweils nur eine Wicklung jeder Phase und die Wicklungen sind jeweils nur einmal in Umfangsrichtung um die Drehachse der elektrischen Maschine geführt. Selbstverständlich könnten die einzelnen Wicklungen jedoch auch ausgestaltet sein, wie zu Fig. 4 erläutert wurde. In allen drei Figuren wird eine Sternschaltung genutzt, bei der Anschlusspunkte 22, 24, 26 aller drei Phasen am Sternpunkt 27 kurzgeschlossen sind.

Fig. 5 zeigt eine Anordnung, bei der die Anschlusspunkte 21, 22 einer ersten Phase, die Anschlusspunkte 23, 24 einer zweiten Phase und die Anschlusspunkte 25, 26 einer dritten Phase in Umfangsrichtung jeweils um einen Winkel von 120° versetzt sind. Vorteilhaft an einer derartigen Anordnung der Anschlusspunkte 21 bis 26 ist, dass Kreuzungspunkte zwischen den Leitern der einzelnen Phasen hierbei relativ weit von zumindest einem der Anschlusspunkte 21 bis 26 beabstandet sind, sodass keine allzu hohen Spannungen zwischen benachbarten Leitern an diesen Kreuzungspunkten auftreten. Problematisch ist jedoch, dass die Anschlusspunkte 21 bis 26 verschiedener Phasen relativ weit voneinander entfernt sind. Dies erschwert die Kontaktierung der einzelnen Anschlusspunkte 21 bis 26 und insbesondere das Kurzschließen der Anschlusspunkte 22, 24 und 26 am Sternpunkt 27. Zur Kontaktierung der drei in Fig. 5 gezeigten Phasen wäre somit eine aufwändige Verschaltbrücke erforderlich, die auf den Wicklungskopf aufgesetzt werden muss. Somit resultiert ein höherer Aufwand zur Herstellung der elektrischen Maschine und potenziell ein erhöhter Bauraumverbrauch.

Wie zu Fig. 4 erläutert, kann aufgrund der vorangehend erläuterten Ausgestaltung der Wicklung mit einem oder zwei Umkehrpunkten 16, 18 im Wesentlichen frei gewählt werden, wo die jeweiligen Anschlusspunkte 21 bis 26 an der jeweiligen Wicklung vorgesehen werden. Daher ist problemlos eine Modifikation möglich, wie sie in Fig. 6 gezeigt ist, bei der alle Anschlusspunkte 21 bis 26 in einem relativ kleinen Winkelbereich in Umfangsrichtung gruppiert werden, um eine leichtere Kontaktierung der Anschlusspunkte 21 bis 26 zu ermöglichen. Da hierbei die Anschlusspunkte 21, 22 der ersten Phase, 22, 23 der zweiten Phase und 25, 26 der dritten Phase in Radialrichtungen auf verschiedene Ebenen gelegt werden können, kann dennoch erreicht werden, dass zwischen sich kreuzenden Leitern im Wicklungskopf keine allzu hohen Spannungen auftreten und somit keine starken Isolationsstärken erforderlich sind.

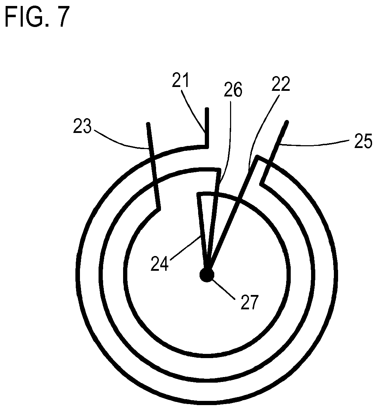

Fig. 7 zeigt eine weitere Modifikation der Anordnung der Anschlusspunkte 21 bis 26. Hierbei wird der Strom ausgehend von den Anschlusspunkten 21, 23 der ersten und zweiten Phase zunächst gegen den Uhrzeigersinn geführt, während er ausgehend vom Anschlusspunkt 25 der dritten Phase im Uhrzeigersinn geführt wird. Hierdurch kann eine Spannung, die zwischen sich kreuzenden Leitern unterschiedlicher Phasen abfällt, weiter reduziert werden.

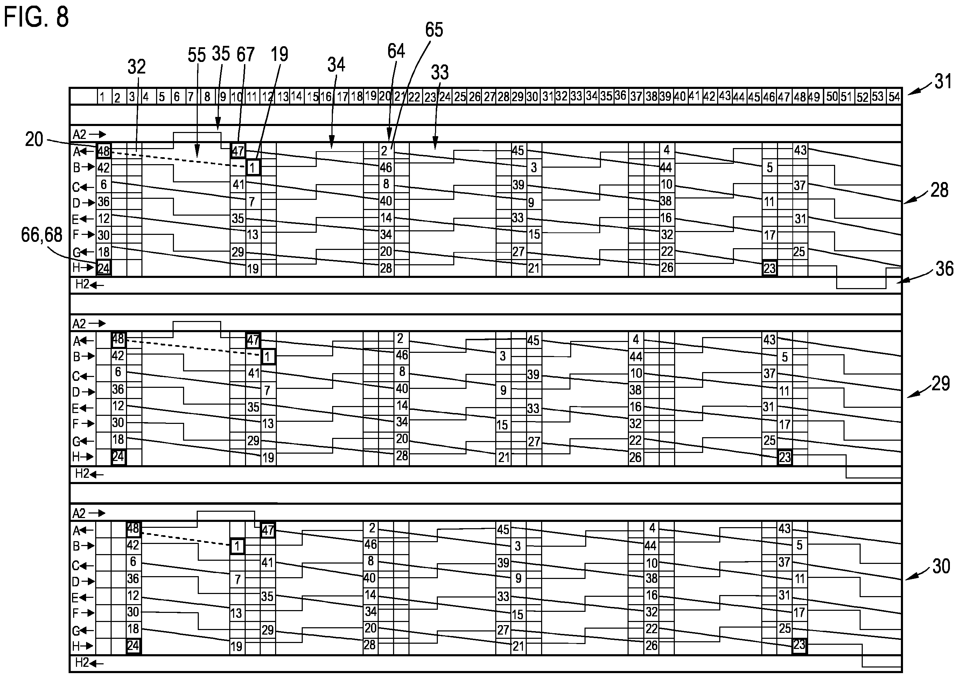

Die Figuren 8 bis 15 zeigen verschiedene Wicklungsschemata, durch die die in Fig. 7 gezeigte geometrische Anordnung der Anschlusspunkte, also eine Gruppierung aller Anschlusspunkte in Umfangsrichtung, eine Nutzung von entgegengesetzten Umlaufsinnen der Phasen und auch eine Beabstandung der Anschlusspunkte in Radialrichtung, umgesetzt werden kann.

Das in Fig. 8 dargestellte Wickelschema zeigt den Aufbau dreier Wicklungen 28, 29, 30 eines Stators einer elektrischen Maschine. Der Wicklungsträger weist insgesamt 54 Nuten 31 auf, wobei das Wicklungsschema eine aufgerollte Darstellung dieser Nuten und der hierin angeordneten Leiterabschnitte zeigt. Die Kästchen 32 markieren hierbei jeweils eine Wicklungslage in jeweils einer Nut 31. Leere Kästchen 32 zeigen hierbei jeweils Wicklungslagen anderer Wicklungen der gleichen Phase. Die Kästchen bzw. Wicklungslagen für die weiterhin weiteren Phasen sind in Fig, 8 aus Übersichtlichkeitsgründen nicht dargestellt. Die mit den Ziffern 1 bis 48 markierten Kästchen bezeichnen hierbei die Nutabschnitte der jeweiligen Wicklung 28 bis 30, wobei die Abzählung der Nutabschnitte entlang dem Leiter von einem ersten Anschlusspunkt 19 zu einem zweiten Anschlusspunkt 20 erfolgt. Die Buchstaben A bis H bezeichnen die einzelnen Wicklungslagen der Nuten. Die daneben dargestellten Pfeile geben an, in welche Richtung freie Enden von Nutabschnitten in dieser Wicklungslage jeweils beim Twisten gekrümmt werden, um sie mit weiteren freien Enden zu verbinden. Die Wicklungslage A kann die von der Drehachse der elektrischen Maschine am weitesten beabstandete Wicklungslage sein und die Wicklungslage H die am nähesten an der Drehachse angeordnete Wicklungslage oder umgekehrt.

Die Wicklungen 28 bis 30 werden dadurch gebildet, dass eine Vielzahl von Leiterklammern radial angeordnet wird und die jeweiligen Nutabschnitte axial in die Nuten 31 eingeführt werden. Hierbei resultieren in den einzelnen Nuten 31 Stapel 64, in denen die Nutabschnitte der gleichen Wicklung 28 bis 30 oder verschiedener Wicklungen der gleichen Phase gestapelt sind. Wie später noch genauer erläutert werden wird, kann bei einer Wicklung mit einer Sehnung auch eine Staplung mit Nutanschnitten verschiedener Phasen im gleichen Stapel 64 erfolgen.

Da die Nutabschnitte durch Einführen von Leiterklammern ausgebildet werden, sind jeweils zwei der Nutabschnitte durch einen Verbindungsabschnitt 33 verbunden, der durch den Kopplungsabschnitt der jeweiligen Leiterklammer gebildet wird. Diese Verbindungsabschnitte 33 sind in den Figuren 8 bis 15 durch gerade Linien dargestellt, die zwei Kästchen verbinden. Die verbleibenden Verbindungsabschnitte 34 werden dadurch gebildet, dass die freien Enden der Leiterklammern in jene Richtung gebogen bzw. getwistet werden, die für die einzelnen Wicklungslagen A bis H durch den neben dem jeweiligen Buchstaben gezeigten Pfeil dargestellt ist und anschließend verbunden werden. Diese Verbindungsabschnitte 34 werden in den Figuren 8 bis 15 durch gestufte Linien dargestellt.

Die in Fig. 8 dargestellten Wicklungen sind derart ausgebildet, dass sich bei einem Stromfluss durch den Leiter von dem Anschlusspunkt 19 zu dem Anschlusspunkt 20 der Umlaufsinn des Stromflusses ändert. Ein an dem Anschlusspunkt 19 eingespeister Strom läuft mit einem ersten Umlaufsinn bis zu dem Umkehrnutabschnitt 68, ändert dort seinen Umlaufsinn und wird mit diesem geänderten Umlaufsinn zum zweiten Anschlusspunkt 20 geführt. Dies wird dadurch erreicht, dass das freie Ende, das den Umkehrnutabschnitt 68 verlängert, nicht, wie es in der Wicklungslage H für die anderen freien Enden erfolgt, in Fig. 8 nach rechts gekrümmt wird, sondern, wie für den entsprechenden Verbindungsabschnitt 36 dargestellt ist, zunächst radial nach innen in die Lage H2 geführt wird und dort nach links zu dem mit der Ziffer 23 nummerierten Kästchen bzw. Nutabschnitt geführt wird. Somit werden beide Verbindungsabschnitte, die den Umkehrnutabschnitt 68 mit den weiteren Nutabschnitten verbinden, in die gleiche Richtung in Umfangsrichtung des Wicklungsträgers geführt.

Ein erster Leiterabschnitt, in dem der Strom mit einem ersten Umlaufsinn, in Fig. 8 nach rechts, geführt wird, erstreckt sich von einem radial äußersten Nutabschnitt 65 eines Stapels 64 zu einem radial innersten Nutabschnitt 66 eines zweiten Stapels 64. Insbesondere ist der Umkehrnutabschnitte 68 ein innerster Nutabschnitt 66 eines Stapels 64, sodass die Führung des verbundenen freien Endes in der separaten Wicklungslage H2 leicht möglich ist.

Auch jener Leiterabschnitt, der den Strom mit einem umgekehrten Umlaufsinn führt, als der vorangehend diskutierte Leiterabschnitt, erstreckt sich von einem radial innersten Nutabschnitt 66 eines Stapels 64 zu einem radial äußersten Nutabschnitt 67 eines weiteren Stapels 64.

In den Wicklungen 28 bis 30 ist zudem ein Verbindungsabschnitt 35 vorgesehen, der ebenfalls dadurch gebildet wird, dass ein freies Ende, das mit dem mit der Ziffer 48 bezeichneten Kästchen bzw. Nutabschnitt verbunden ist, nicht, wie es für die entsprechende Wicklungslage A für alle anderen freien Enden erfolgt in Fig. 8 nach links geführt wird, sondern zunächst radial in die weiter außen liegende Lage A2 und dort zurück zu dem mit der Ziffer 47 bezeichneten Kästchen bzw. zu einem zu dem entsprechenden Nutabschnitt zugehörigen freien Ende.

Im Rahmen des Aufbaus der Wicklungen 28 bis 30 können auch die den mit den Ziffern 1 und 48 bezeichneten Kästchen zugeordneten Nutabschnitte durch eine Leiterklammer gebildet werden. Somit resultiert beim Aufbau zunächst ein zusätzlicher Verbindungsabschnitt 55 der durch den Kopplungsabschnitt der entsprechenden Leiterklammer gebildet wird. Der Nutabschnitt des mit der Ziffer 48 bezeichneten Kästchens bildet somit zunächst einen zusätzlichen Umkehrnutabschnitt, dessen freies Ende und Kopplungsabschnitt in die gleiche Richtung in Umfangsrichtung des Wicklungsträgers geführt sind. Der Verbindungsabschnitt 55 kann anschließend getrennt werden, um die Anschlusspunkte 19, 20 bereitzustellen. Ein derartiges Vorgehen ist einerseits vorteilhaft, da alle Wicklungen 28 bis 30 durch Einsetzen von Leiterklammern gebildet werden können, womit keine verschiedenartigen Komponenten gehandhabt werden müssen. Zudem ist es leicht möglich, die Anschlusspunkte 19, 20 bedarfsgerecht an einer anderen Stelle der jeweiligen Wicklung 28 bis 30 anzuordnen, indem nach Ausbildung der erläuterten Leiterschleife ein anderer Kopplungsabschnitt getrennt wird oder freie Enden nicht verbunden und erneut getrennt werden.

Alternativ wäre es auch möglich, für die mit den Ziffern 1 und 48 bezeichneten Kästchen keine Leiterklammer sondern einen linearen Pin zu verwenden, um die jeweiligen Nutabschnitte und freien Enden auszubilden.

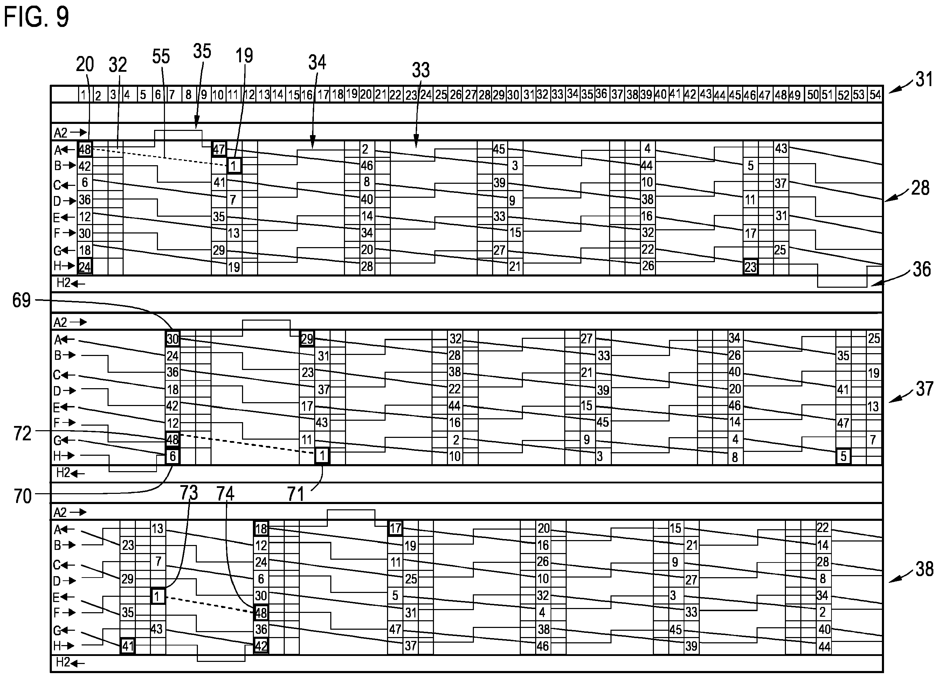

Fig. 9 zeigt Wicklungen 28, 37, 38 verschiedener Phasen. Die Wicklung 28 ist hierbei identisch zu der bereits in Fig. 8 gezeigten Wicklung. Für die verbleibenden Phasen ist jeweils nur eine Wicklung 37, 38 gezeigt. Der grundsätzliche Aufbau der Wicklungen 37, 38 entspricht dem Aufbau der Wicklung 28, wobei der jeweilige Leiter für Wicklungen 28, 37, 38 verschiedener Phasen durch verschiedene der Nuten 31 geführt ist. Nicht nummerierte Kästchen zeigen auch bei den Wicklungen 37, 38 bestimmte Wicklungslagen in bestimmten Nuten, in denen weitere, nicht dargestellte Wicklungen der jeweils gleichen Phase geführt sind.

Um einen Spannungsunterschied an Kreuzungspunkten der verschiedenen Phasen zu minimieren und somit die Isolationsanforderungen für die Leiter zu reduzieren, ist es vorteilhaft, die Anschlusspunkte 19, 20 der Wicklung 28, die Anschlusspunkte 71, 72 der Wicklung 37 und die Anschlusspunkte 73, 74 der Wicklung 38 an unterschiedlichen Positionen in Radialrichtung, also in unterschiedlichen der Wicklungslagen A bis H anzuordnen. Um eine Kontaktierung zu erleichtern, sollen sie zudem in Umfangsrichtung gruppiert sein. Wie bereits vorangehend erläutert können die Wicklungen zunächst in Form einer Leiterschleife ausgebildet werden, wonach bedarfsgerecht ein Verbindungsabschnitt 55 getrennt werden kann, um an der Position des Verbindungsabschnitts 55 die jeweiligen Anschlusspunkte auszubilden. Der jeweils getrennte Verbindungsabschnitt 55 ist für die Wicklungen 28, 37, 38 als gestrichelte Linie dargestellt, die die jeweiligen Anschlusspunkte 19, 20 bzw. 71, 72 bzw. 73, 74 verbindet. Dadurch, dass in den Wicklungen 37, 38 die Trennung des Verbindungsabschnitts 55 in einem anderen Abschnitt der Wicklung erfolgt, sind in diesen Wicklungen 37, 38 jeweils zwei Umkehrnutabschnitte 69, 70 vorhanden, an denen das den jeweiligen Nutabschnitt 69, 70 verlängernde freie Ende der jeweiligen Leiterklammer in die gleiche Richtung geführt ist wie der Kopplungsabschnitt.

Das gezeigte Wicklungsschema erreicht zudem den Vorteil, dass für die Wicklung 38 ausgehend vom Anschlusspunkt 73 zunächst ein anderer Umlaufsinn für den Strom erreicht wird, als für die Wicklungen 28, 37. Dies führt dazu, dass ein Spannungsunterschied an sich gekreuzten Leitern der verschiedenen Wicklungen 28, 37, 38 weiter reduziert werden kann.

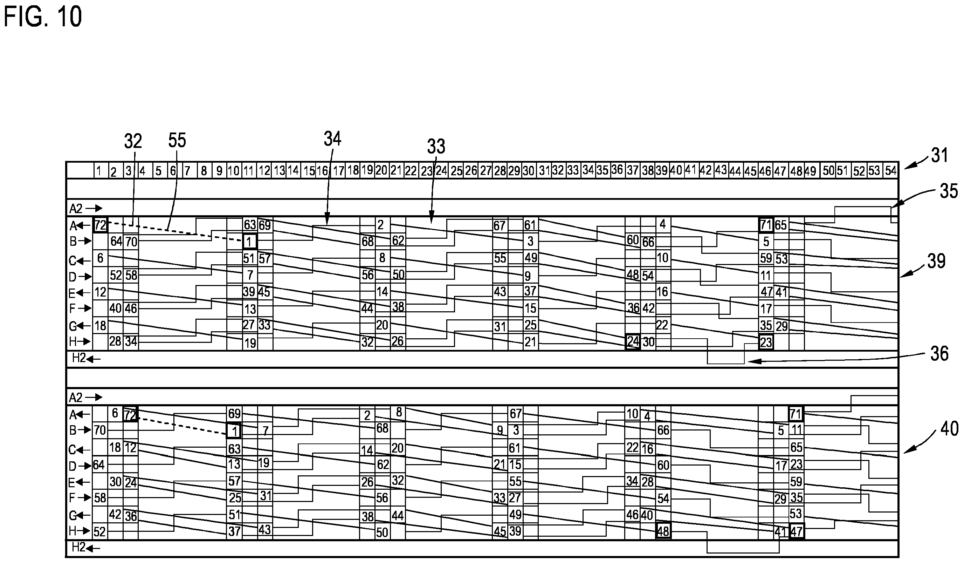

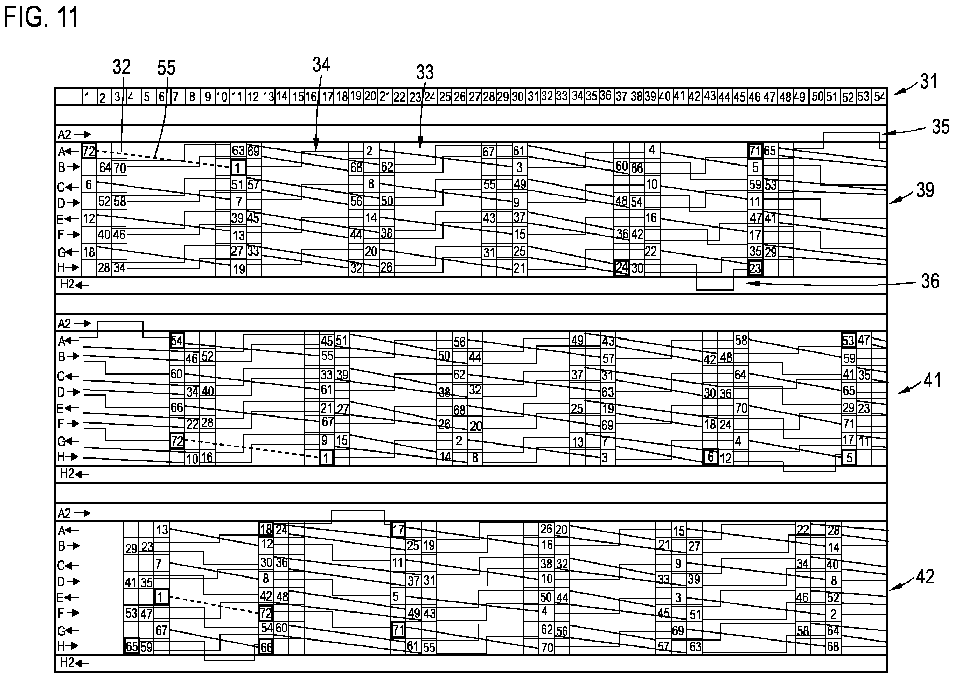

Das erläuterte Vorgehen zum Aufbau der Wicklungen erlaubt es auch, deutlich veränderte Wickelschemata bei Nutzung des gleichen Wicklungsträgers zu implementieren. Ein Beispiel hierfür ist in Figuren 10 und 11 dargestellt. Wie in Fig. 10 dargestellt ist, umfasst hierbei jede Phase genau zwei Wicklungen 39, 40. Zur Verdeutlichung der Anordnungen der Wicklungen 39, 41, 42 verschiedener Phasen zueinander, sind diese in Fig. 11 dargestellt. Eine Nutzung von weniger Wicklungen pro Phase kann ausreichend sein, wenn geringere Ströme zum Betrieb der elektrischen Maschine genutzt werden. Da insgesamt nur sechs Wicklungen genutzt werden, umfasst der jeweilige Leiter der Wicklung mehr Nutabschnitte, womit die den einzelnen Nutabschnitten zugehörenden Kästchen mit den Ziffern 1 bis 72 nummeriert sind. Die mit den Ziffern 1 und 72 bezeichneten Kästchen geben somit die Positionen der Anschlusspunkte der jeweiligen Wicklung 39 bis 42 an. Wie in Figuren 10 und 11 zu erkennen ist, werden wiederum durch Nutzung der in den separaten Wicklungslagen A2 und H2 geführten Verbindungsabschnitte 35, 36 die Vorteile erreicht, dass durch entsprechende Wahl der Positionen der Anschlusspunkte und des Umlaufsinns des Stroms die Anschlusspunkte räumlich gruppiert sind, sodass ein einfacher Anschluss möglich ist, wobei zugleich Spannungsunterschiede zwischen sich kreuzenden Leitern von Wicklungen verschiedener Phasen kleingehalten werden.

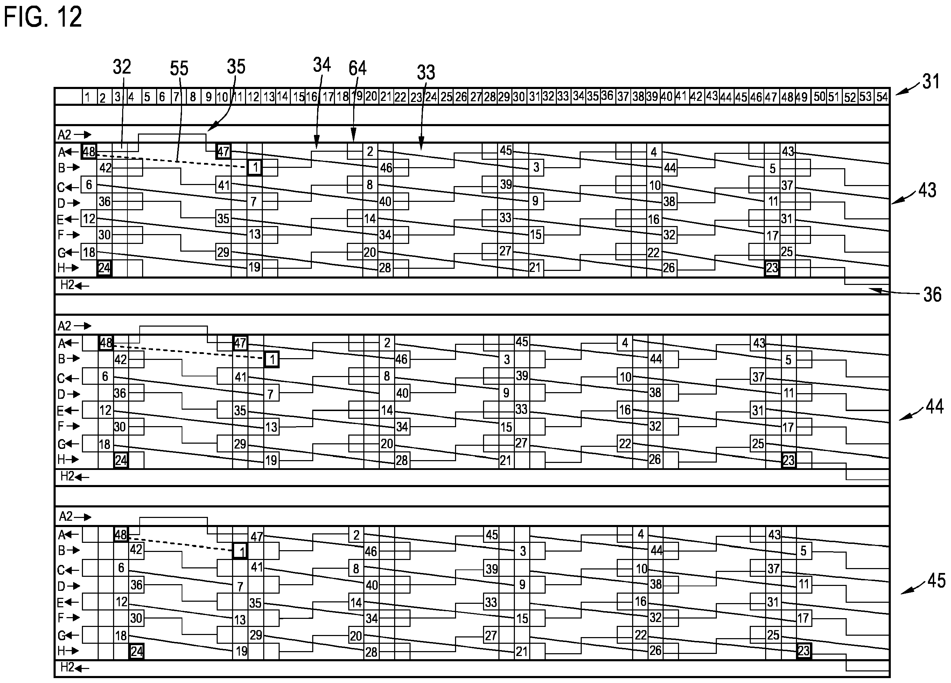

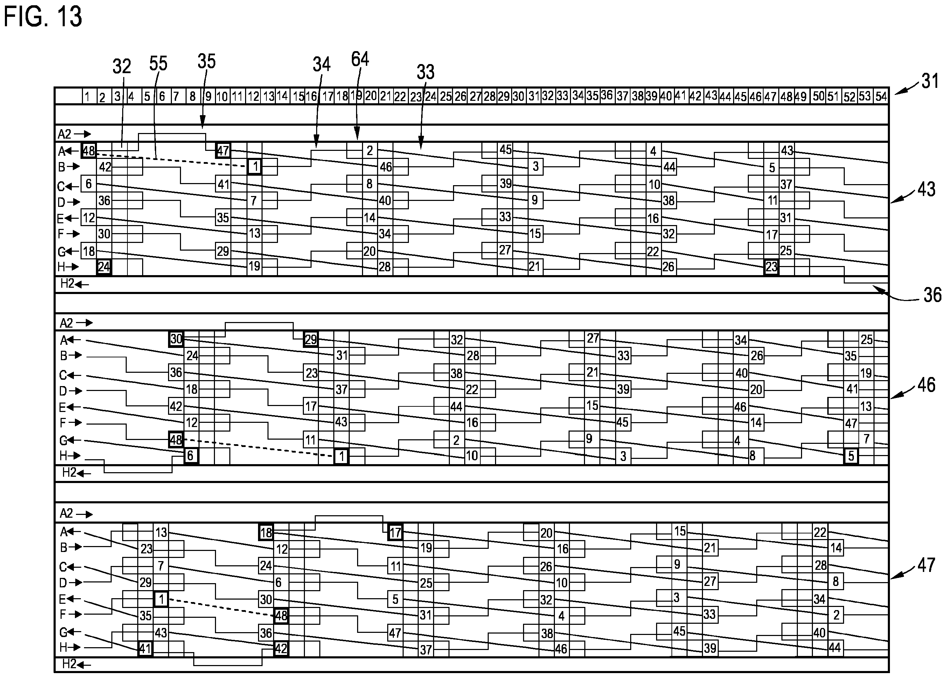

Es kann vorteilhaft sein, die einzelnen Wicklungslagen A bis H einer jeweiligen Wicklung gegeneinander zu verschieben. Dies kann dazu dienen, eine Erregerkurve zu glätten und beispielsweise bei einem Betrieb einer elektrischen Maschine als Generator Oberschwingungen der induzierten Spannung zu reduzieren. Dies wird auch Sehnung der Wicklung genannt. Auch eine gesehnte Wicklung kann mit dem vorangehend beschriebenen Vorgehen leicht implementiert werden. Ein Wicklungsschema für eine solche Wicklung ist in den Figuren 12 und 13 dargestellt, wobei Fig. 12 drei Wicklungen 43, 44, 45 einer Phase zeigt und Fig. 13 die relative Anordnung der Wicklungen 43, 46, 47 verschiedener Phasen zueinander darstellt. Wie insbesondere Fig. 13 zu entnehmen ist, umfassen Teile der Stapel 64 bei einer gesehnten Wicklung Nutabschnitte von Windungen 43, 46, 47 verschiedener Phasen. Abgesehen von der Verschiebung der Windungslagen A bis H der Wicklungen 43 bis 47 und der hieraus resultierenden Variation der Länge der Kopplungsabschnitte der genutzten Leiterklammern entspricht der prinzipielle Aufbau der Wicklungen dem bereits zu den Figuren 8 bis 11 erläuterten Aufbauten.

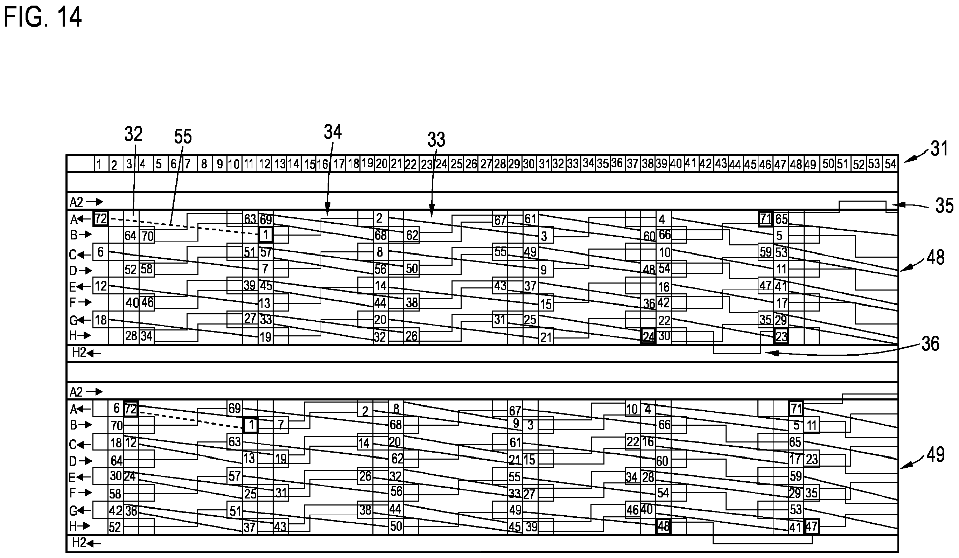

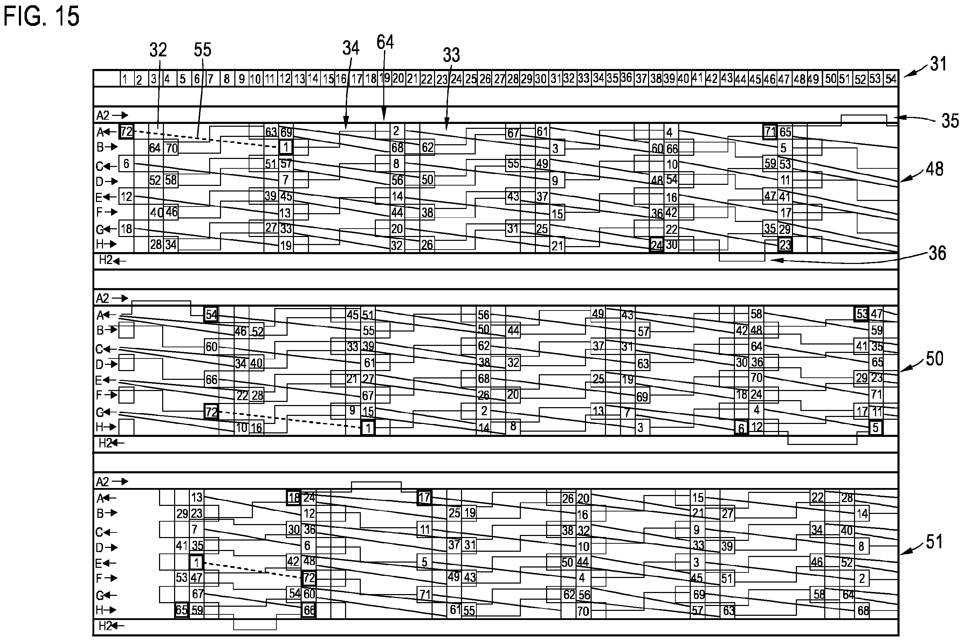

Eine gesehnte Wicklung kann auch für eine elektrische Maschine implementiert werden, bei der die jeweiligen Phasen genau zwei Wicklungen 48, 49 aufweisen, wie in den Figuren 14 und 15 dargestellt ist. Hierbei zeigt Fig. 14 die beiden Wicklungen 48, 49 einer Phase und Fig. 15 die relative Anordnung der Wicklungen 48, 50, 51 verschiedener Phasen zueinander. Aufgrund der Sehnung der Wicklung treten auch hier Stapel 64 auf, die Nutabschnitte von Wicklungen 48, 50, 51 verschiedener Phasen umfassen. Das Vorgehen zum Aufbau von entsprechenden Wicklungen entspricht dem bereits zu den Figuren 8 bis 13 erläuterten Vorgehen.

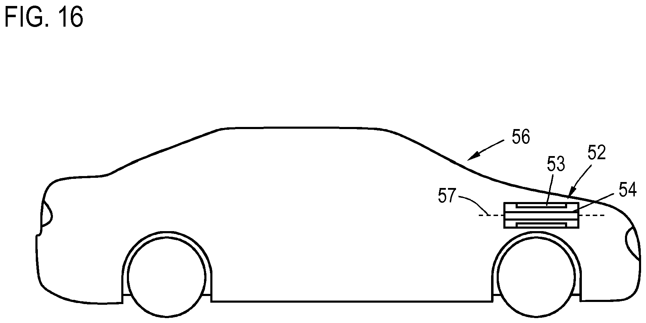

Fig. 16 zeigt ein Ausführungsbeispiel eines erfindungsgemäßen Kraftfahrzeugs 56. Das Kraftfahrzeug 56 umfasst eine elektrische Maschine 52, die einen Stator 53 umfasst, der wie vorangehend erläutert aufgebaut ist. Innerhalb des Stators 53 ist ein Rotor 54 angeordnet, der um die Drehachse 57 der elektrischen Maschine 52 drehbar gelagert ist. Die elektrische Maschine 52 kann ein Antriebsmotor des Kraftfahrzeugs 56 sein.

## Patentansprüche

1. Elektrische Maschine mit einem Wicklungsträger (2), der mehrere Nuten (31) aufweist und wenigstens eine Wicklung (3, 4, 28 - 30, 37 - 51) trägt, wobei die Wicklung (3, 4, 28 - 30, 37 - 51) durch einen jeweiligen Leiter (77) gebildet ist, der mehrere Nutabschnitte (5, 7) aufweist, die jeweils durch eine der Nuten (31) des Wicklungsträgers (2) geführt und durch Verbindungsabschnitte (33 - 36, 55, 75, 76) des Leiters (16), die außerhalb der Nuten (31) liegen, leitend verbunden sind, wobei bei einem Stromfluss durch den jeweiligen Leiter (77) von einem ersten Anschlusspunkt (19, 21, 23, 25, 69, 73) zu einem zweiten Anschlusspunkt (20, 22, 24, 26, 70, 74) der jeweiligen Wicklung (3, 4, 28 - 30, 37 - 51) der Strom in allen Verbindungsabschnitten (33 - 36, 55, 75, 76), die in einem mehrere Verbindungsabschnitte (33 - 36, 55, 75, 76) umfassenden ersten Leiterabschnitt (58) dieses Leiters (77) liegen, mit einem ersten Umlaufsinn (59) und in allen Verbindungsabschnitten (33 - 36, 55, 75, 76), die in einem mehrere Verbindungsabschnitte (33 - 36, 55, 75, 76) umfassenden zweiten Leiterabschnitt (60) dieses Leiters (77) liegen, mit einem zum ersten Umlaufsinn (59) entgegengesetzten zweiten Umlaufsinn (61) um eine Drehachse (57) der elektrischen Maschine (52) geführt wird, wobei der jeweilige Leiter (77) durch mehrere miteinander leitend verbundene Leiterklammern (5) gebildet ist, die jeweils zwei der Nutabschnitte (6, 7) und einen die Nutabschnitte (6, 7) verbindenden Kopplungsabschnitt (8) ausbilden, wobei der Kopplungsabschnitt (8) einen ersten Verbindungsabschnitte (75) für diese Nutabschnitte (6, 7) bildet, wobei ein jeweiliger zweiter Verbindungsabschnitt (76) durch ein jeweiliges freies Ende (9 - 15) der Leiterklammer (5) gebildet wird, das in eine Richtung in Umfangsrichtung des Wicklungsträgers (2) gebogen und mit einem freien Ende (9 - 15) einer weiteren Leiterklammer (5) leitend verbunden ist,
**dadurch gekennzeichnet,**
**dass** der Leiter (77) wenigstens einen Nutabschnitt (6, 7) aufweist, der als Umkehrnutabschnitt (68 - 70) über zwei Verbindungsabschnitte (33 - 36, 55, 75, 76) mit den weiteren Nutabschnitten (6, 7) des Leiters (77) verbunden ist, die von dem jeweiligen Umkehrnutabschnitt (68 - 70) ausgehend in die gleiche Richtung in Umfangsrichtung des Wicklungsträgers (2) geführt sind, wobei in den Nuten (31) jeweils ein Stapel (64) aus mehreren in Radialrichtung gestapelten Nutabschnitten (5, 7) angeordnet ist, wobei, abgesehen von einem oder zwei Umkehrnutabschnitten (68 - 70) des jeweiligen Leiters (77), die freien Enden (9 - 15) der Leiterklammern (5), die Nutabschnitte (6, 7), die in der gleichen radialen Position in den Stapeln (64) angeordnet sind, verlängern, in die gleiche Richtung in Umfangsrichtung des Wicklungsträgers (2) gebogen sind.

2. Elektrische Maschine nach Anspruch 1,
**dadurch gekennzeichnet,**
**dass** der erste und/oder der zweite Leiterabschnitt (58, 60) durch die Nuten (31) des Wicklungsträgers (2) mäandernd wenigstens einmal in Umfangsrichtung um die Drehachse (57) geführt sind.

3. Elektrische Maschine nach Anspruch 1 oder 2,
**dadurch gekennzeichnet,**
**dass** in den Nuten (31) jeweils ein Stapel (64) aus mehreren in Radialrichtung gestapelten Nutabschnitten (6, 7) angeordnet ist, wobei sich der erste und/oder der zweite Leiterabschnitt (58, 60) eines jeweiligen Leiters (77) zumindest von einem radial äußersten Nutabschnitt (65, 67) eines Stapels (64) zu einem radial innersten Nutabschnitt (66) des oder eines weiteren Stapels (64) erstrecken.

4. Elektrische Maschine nach einem der vorangehenden Ansprüche, **dadurch gekennzeichnet,**
**dass** in den Nuten (31) jeweils der oder ein Stapel (31) aus mehreren in Radialrichtung gestapelten Nutabschnitten (6, 7) angeordnet ist, wobei der Umkehrnutabschnitt (68 - 70) der radial äußerste Nutabschnitt (65, 67) eines der Stapel (64) ist und einer der Verbindungsabschnitte (33 - 36, 55, 75, 76), die den Umkehrnutabschnitt (68 - 70) mit den weiteren Nutabschnitten (6, 7) des Leiters (77) verbinden, in Radialrichtung nach außen geführt ist, oder wobei der Umkehrnutabschnitt (68-70) der radial innerste Nutabschnitt (66) eines der Stapel (64) ist und einer der Verbindungsabschnitte (33 - 36, 55, 75, 76), die den Umkehrnutabschnitt (68 - 70) mit den weiteren Nutabschnitten (6, 7) des Leiters (77) verbinden, in Radialrichtung nach innen geführt ist.

5. Elektrische Maschine nach einem der vorangehenden Ansprüche, **dadurch gekennzeichnet,**
**dass** abgesehen von einem oder zwei Umkehrnutabschnitten (68 - 70) des jeweiligen Leiters (77) und Nutabschnitten (6, 7) des Leiters (77), die zu den Anschlusspunkten (20, 22, 24, 26, 70, 74) benachbart sind, alle Nutabschnitte (6, 7) des Leiters (77) über zwei Verbindungsabschnitte (33 - 36, 55, 75, 76) mit den weiteren Nutabschnitten (6, 7) des Leiters (77) verbunden sind, die von dem jeweiligen Nutabschnitt (6, 7) ausgehend in zueinander entgegengesetzte Richtung in Umfangsrichtung des Wicklungsträgers (2) geführt sind.

6. Elektrische Maschine nach einem der vorangehenden Ansprüche, **dadurch gekennzeichnet,**
**dass** der Wicklungsträger (2) eine erste Wicklung (28 - 30, 39, 40, 43 - 45, 48, 49) einer ersten Phase der elektrischen Maschine (52) und eine zweite Wicklung (37, 38, 41, 42, 46, 47, 50, 51) einer zweiten Phase der elektrischen Maschine (52) trägt, wobei jene Nutabschnitte (6, 7), an denen der erste und/oder der zweite Anschlusspunkt (19, 20) der ersten Wicklung (28 - 30, 39, 40, 43 - 45, 48, 49) ausgebildet ist, bezüglich der Drehachse (57) der elektrischen Maschine (52) auf einem anderen Radius angeordnet sind als jene Nutabschnitte (6, 7), an denen der erste und/oder der zweite Anschlusspunkt (70 -74) der zweiten Wicklung (37, 38, 41, 42, 46, 47, 50, 51) ausgebildet ist.

7. Elektrische Maschine nach einem der vorangehenden Ansprüche, **dadurch gekennzeichnet,**
**dass** der Wicklungsträger (2) die oder eine erste Wicklung (28 - 30, 39, 40, 43 - 45, 48, 49) der oder einer ersten Phase der elektrischen Maschine (52) und die oder eine zweite Wicklung (38, 42, 47, 51) der oder einer zweiten Phase der elektrischen Maschine (52) trägt, wobei bei einem Stromfluss durch den jeweiligen Leiter (77) von dem ersten Anschlusspunkt (19, 21, 23, 25, 69, 73) zu dem zweiten Anschlusspunkt (20, 22, 24, 26, 70, 74) der jeweiligen Wicklung (3, 4, 28 - 30, 37 - 51) der Strom in den Verbindungsabschnitten (33 - 36, 55, 75, 76) eines ersten Anschlussabschnitts des Leiters (77) der ersten Wicklung (28 - 30, 39, 40, 43 - 45, 48, 49), der den ersten Anschlusspunkt (19, 21, 23, 25, 69, 73) der ersten Wicklung (28 - 30, 39, 40, 43 - 45, 48, 49) umfasst, mit einem Umlaufsinn um die Drehachse (57) der elektrischen Maschine (52) geführt wird, der zu dem Umlaufsinn entgegengesetzt ist, mit dem der Strom in den Verbindungsabschnitten (33 - 36, 55, 75, 76) eines zweiten Anschlussabschnitts des Leiters (77) der zweiten Wicklung (38, 42, 47, 51), der den ersten Anschlusspunkt (19, 21, 23, 25, 69, 73) der zweiten Wicklung (38, 42, 47, 51) umfasst, geführt wird.

8. Kraftfahrzeug,
**dadurch gekennzeichnet,**
**dass** es eine elektrische Maschine (52) nach einem der vorangehenden Ansprüche umfasst.

9. Verfahren zur Herstellung wenigstens einer Wicklung (3, 4, 28 - 30, 37
- 51) für eine elektrische Maschine (52), umfassend die Schritte:
- Bereitstellen eines Wicklungsträgers (2) und mehrerer Leiterklammern (5), die jeweils aus einem klammerförmigen Leiterabschnitt gebildet sind und die jeweils zwei Nutabschnitte (6, 7) und einen die Nutabschnitte (6, 7) verbindenden Kopplungsabschnitt (8) ausbilden, wobei der Kopplungsabschnitt (8) einen ersten Verbindungsabschnitt (75) für diese Nutabschnitte (6, 7) bildet,
- Axiales Einschieben der Leiterklammern (5) in den Wicklungsträger (2) derart, dass die zwei Nutabschnitte (6, 7) jeder Leiterklammer (5) in einer jeweiligen Nut (31) des Wicklungsträgers (2) verlaufen, und
- Biegen der freien Enden (9 - 15) der Leiterklammern (6, 7) in eine jeweilige Richtung in Umfangsrichtung des Wicklungsträgers (2) und Verbinden mit einem freien Ende (9 - 15) einer jeweiligen weiteren Leiterklammer (5) zur Ausbildung des Leiters (77) aus den Leiterabschnitten, wobei ein freies Ende (15) wenigstens einer Leiterklammer (5) in die gleiche Richtung in Umfangsrichtung des Wicklungsträgers (2) gebogen wird, in die sich auch ein die Nutabschnitte (6, 7) dieser Leiterklammer (5) verbindender Kopplungsabschnitt (8) erstreckt, derart dass der Leiter (77) wenigstens einen Nutabschnitt (6, 7) aufweist, der als Umkehrnutabschnitt (68 - 70) über zwei Verbindungsabschnitte (33 - 36, 55, 75, 76) mit den weiteren Nutabschnitten (6, 7) des Leiters (77) verbunden ist, die von dem jeweiligen Umkehrnutabschnitt (68 - 70) ausgehend in die gleiche Richtung in Umfangsrichtung des Wicklungsträgers (2) geführt sind, wobei in den Nuten (31) jeweils ein Stapel (64) aus mehreren in Radialrichtung gestapelten Nutabschnitten (5, 7) angeordnet ist, wobei, abgesehen von einem oder zwei Umkehrnutabschnitten (68 - 70) des jeweiligen Leiters (77), die freien Enden (9 - 15) der Leiterklammern (5), die Nutabschnitte (6, 7), die in der gleichen radialen Position in den Stapeln (64) angeordnet sind, verlängern, in die gleiche Richtung in Umfangsrichtung des Wicklungsträgers (2) gebogen sind.

10. Verfahren nach Anspruch 9, **dadurch gekennzeichnet, dass** die freien Enden (9 -15) der Leiterklammern einer Wicklung (3, 4, 28 - 30, 37 - 51) zunächst derart miteinander verbunden werden, dass eine geschlossene Leiterschleife resultiert, wonach die Verbindung zwischen zwei freien Enden (9 -15) getrennt wird oder ein Kopplungsabschnitt (8) einer der Leiterklammern (5) getrennt wird, um einen ersten und zweiten Anschlusspunkt (19 - 26, 69, 70, 73, 74) der Wicklung (3, 4, 28 - 30, 37 - 51) auszubilden.

## Claims

1. Electrical machine comprising a winding carrier (2) having a plurality of grooves (31) and carrying at least one winding (3, 4, 28-30, 37-51), the winding (3, 4, 28-30, 37-51) being formed by a respective conductor (77) having a plurality of groove portions (5, 7), each of which passes through one of the grooves (31) of the winding carrier (2) and is conductively connected by connection portions (33-36, 55, 75, 76) of the conductor (16) that lie outside the grooves (31), wherein, when current flows through the respective conductor (77) from a first connection point (19, 21, 23, 25, 69, 73) to a second connection point (20, 22, 24, 26, 70, 74) of the respective winding (3, 4, 28-30, 37-51), the current is led about an axis of rotation (57) of the electrical machine (52) in all connection portions (33-36, 55, 75, 76) that lie in a first conductor portion (58) of this conductor (77), which comprises a plurality of connection portion (33 - 36, 55, 75, 76), with a first direction of revolution (59), and in all connection portions (33-36, 55, 75, 76) that lie in a second conductor portion (60) of this conductor (77), which comprises a plurality of connection portions (33-36, 55, 75, 76), with a second direction of revolution (61) that is opposite to the first direction of revolution (59), the respective conductor (77) being formed by a plurality of conductor clips (5) which are conductively connected to one another and which each form two of the groove portions (6, 7) and a coupling portion (8) that connects the groove portions (6, 7), the coupling portion (8) forming a first connection portion (75) for these groove portions (6, 7), a respective second connection portion (76) being formed by a respective free end (9-15) of the conductor clip (5) which is bent in a direction circumferential to the winding carrier (2) and is conductively connected to a free end (9-15) of a further conductor clip (5),
**characterised in that**
the conductor (77) has at least one groove portion (6, 7) that is connected as a reversing groove portion (68-70) via two connection portions (33-36, 55, 75, 76) to the further groove portions (6, 7) of the conductor (77), which, starting from the respective reversing groove portion (68-70), are led in the same direction circumferential to the winding carrier (2), wherein a stack (64) of a plurality of groove portions (5, 7) stacked in the radial direction is arranged in each of the grooves (31), wherein, apart from one or two reversing groove portions (68-70) of the respective conductor (77), the free ends (9-15) of the conductor clips (5), which extend the groove portions (6, 7) arranged in the same radial position in the stacks (64), are bent in the same direction circumferential to the winding carrier (2).

2. Electrical machine according to claim 1,
**characterised in that**
the first and/or the second conductor portion (58, 60) are led through the grooves (31) of the winding carrier (2) in a meandering manner at least once in the circumferential direction about the axis of rotation (57).

3. Electrical machine according to claim 1 or 2,
**characterised in that**
a stack (64) of a plurality of groove portions (6, 7) stacked in the radial direction is arranged in each of the grooves (31), the first and/or the second conductor portion (58, 60) of a respective conductor (77) extending at least from a radially outermost groove portion (65, 67) of a stack (64) to a radially innermost groove portion (66) of the or a further stack (64).

4. Electrical machine according to any one of the preceding claims,
**characterised in that**
the or a stack (31) of a plurality of groove portions (6, 7) stacked in the radial direction is arranged in each of the grooves (31), the reversing groove portion (68 - 70) being the radially outermost groove portion (65, 67) of one of the stacks (64), and one of the connection portions (33-36, 55, 75, 76) connecting the reversing groove portion (68-70) to the further groove portions (6, 7) of the conductor (77) is led radially outward, or wherein the reversing groove portion (68-70) is the radially innermost groove portion (66) of one of the stacks (64) and one of the connection portions (33-36, 55, 75, 76) connecting the reversing groove portion (68-70) to the further groove portions (6, 7) of the conductor (77) is led radially inward.

5. Electrical machine according to any one of the preceding claims,
**characterised in that**
apart from one or two reversing groove portions (68-70) of the respective conductor (77) and groove portions (6, 7) of the conductor (77) which are adjacent to the connection points (20, 22, 24, 26, 70, 74), all groove portions (6, 7) of the conductor (77) are connected via two connection portions (33-36, 55, 75, 76) to the further groove portions (6, 7) of the conductor (77) which, starting from the respective groove portion (6, 7), are led in mutually opposite directions circumferential to the winding carrier (2).

6. Electrical machine according to any one of the preceding claims,
**characterised in that**
the winding carrier (2) carries a first winding (28-30, 39, 40, 43-45, 48, 49) of a first phase of the electric machine (52) and a second winding (37, 38, 41, 42, 46, 47, 50, 51) of a second phase of the electric machine (52), wherein those groove portions (6, 7) at which the first and/or the second connection point (19, 20) of the first winding (28-30, 39, 40, 43-45, 48, 49) is formed are arranged on a different radius with respect to the axis of rotation (57) of the electrical machine (52) than those groove portions (6, 7) on which the first and/or the second connection point (70-74) of the second winding (37, 38, 41, 42, 46, 47, 50, 51) is formed.

7. Electrical machine according to any one of the preceding claims,
**characterised in that**
the winding carrier (2) carries the or a first winding (28-30, 39, 40, 43-45, 48, 49) of the or a first phase of the electrical machine (52) and the or a second winding (38, 42, 47, 51) of the or a second phase of the electrical machine (52), wherein, when current flows through the respective conductor (77) from the first connection point (19, 21, 23, 25, 69, 73) to the second connection point (20, 22, 24, 26, 70, 74) of the respective winding (3, 4, 28-30, 37-51), the current in the connection portions (33-36, 55, 75, 76) of a first connection portion of the conductor (77) of the first winding (28-30, 39, 40, 43-45, 48, 49), which comprises the first connection point (19, 21, 23, 25, 69, 73) of the first winding (28-30, 39, 40, 43-45, 48, 49), is led about the axis of rotation (57) of the electrical machine (52) with a direction of rotation which is opposite to the direction of rotation of the electrical machine (52), with which the current is led in the connection portions (33-36, 55, 75, 76) of a second connection portion of the conductor (77) of the second winding (38, 42, 47, 51) which comprises the first connection point (19, 21, 23, 25, 69, 73) of the second winding (38, 42, 47, 51).

8. Motor vehicle,
**characterised in that**
it comprises an electrical machine (52) according to any one of the preceding claims.

9. Method of manufacturing at least one winding (3, 4, 28-30, 37-51) for an electric machine (52), comprising the steps of:
- Providing a winding carrier (2) and a plurality of conductor clips (5), each formed of a clip-shaped conductor portion and each forming two groove portions (6, 7) and a coupling portion (8) connecting the groove portions (6, 7), the coupling portion (8) forming a first connection portion (75) for these groove portions (6, 7),
- Axial insertion of the conductor clips (5) into the winding carrier (2) in such a way that the two groove portions (6, 7) of each conductor clip (5) run in a respective groove (31) of the winding carrier (2), and
- Bending the free ends (9-15) of the conductor clips (6, 7) in a respective direction circumferential to the winding carrier (2) and connecting them to a free end (9-15) of a respective further conductor clip (5) to form the conductor (77) from the conductor portions, a free end (15) of at least one conductor clip (5) being bent in the same direction circumferential to the winding carrier (2), into which a coupling portion (8) connecting the groove portions (6, 7) of this conductor clip (5) also extends, in such a way that the conductor (77) has at least one groove portion (6, 7) that is connected as a reversing groove portion (68-70) via two connection portions (33-36, 55, 75, 76) to the further groove portions (6, 7) of the conductor (77) which, starting from the respective reversing groove portion (68-70), are led in the same direction circumferential to the winding carrier (2), a stack (64) of a plurality of groove portions (5, 7) stacked in the radial direction being arranged in each of the grooves (31), wherein, apart from one or two reversing groove portions (68-70) of the respective conductor (77), the free ends (9-15) of the conductor clamps (5), which extend groove portions (6, 7) arranged in the same radial position in the stacks (64), are bent in the same direction circumferential to the winding carrier (2).

10. Method according to claim 9, **characterised in that** the free ends (9 -15) of the conductor clamps of a winding (3, 4, 28-30, 37-51) are first connected to each other in such a way that a closed conductor loop results, whereafter the connection between two free ends (9-15) is disconnected or a coupling portion (8) of one of the conductor clamps (5) is disconnected to form a first and second connection point (19-26, 69, 70, 73, 74) of the winding (3, 4, 28-30, 37-51).

## Revendications

1. Moteur électrique avec un support d'enroulement (2) qui présente plusieurs rainures (31) et porte au moins un enroulement (3, 4, 28 - 30, 37 - 51), dans lequel l'enroulement (3, 4, 28 - 30, 37 - 51) est formé par un conducteur respectif (77), qui présente plusieurs sections de rainure (5, 7) qui sont guidées respectivement à travers l'une des rainures (31) du support d'enroulement (2) et qui sont reliées de manière conductrice par des sections de liaison (33 - 36, 55, 75, 76) du conducteur (16) qui se trouvent à l'extérieur des rainures (31), dans lequel, lors d'un flux de courant à travers le conducteur respectif (77) d'un premier point de raccordement (19, 21, 23, 25, 69, 73) à un second point de raccordement (20, 22, 24, 26, 70, 74) de l'enroulement respectif (3, 4, 28-30, 37-51), le courant circule dans un premier sens de circulation (59) dans toutes les sections de liaison (33 - 36, 55, 75, 76) qui se trouvent dans une première section de conducteur (58) de ce conducteur (77) comprenant plusieurs sections de liaison (33 - 36, 55, 75, 76), et dans toutes les sections de liaison (33 - 36, 55, 75, 76) qui se trouvent dans une seconde section de conducteur (60) de ce conducteur (77) comprenant plusieurs sections de liaison (33 - 36, 55, 75, 76), est guidé autour d'un axe de rotation (57) du moteur électrique (52) avec un second sens de rotation (61) opposé au premier sens de rotation (59), dans lequel le conducteur respectif (77) est formé par plusieurs pinces de conducteur (5) reliées entre elles de manière conductrice, qui réalisent respectivement deux des sections de rainure (6, 7) et une section d'accouplement (8) reliant les sections de rainure (6, 7), dans lequel la section d'accouplement (8) forme une première section de liaison (75) pour ces sections de rainure (6, 7), dans lequel une seconde section de liaison (76) respective est formée par une extrémité libre (9-15) respective de la pince de conducteur (5), qui est pliée dans une direction dans la direction circonférentielle du support d'enroulement (2) et est reliée de manière conductrice à une extrémité libre (9-15) d'une autre pince de conducteur (5),
**caractérisé en ce que**
le conducteur (77) présente au moins une section de rainure (6, 7) qui est reliée en tant que section de rainure inversée (68 - 70) par le biais de deux sections de liaison (33 - 36, 55, 75, 76) aux autres sections de rainure (6, 7) du conducteur (77), qui sont guidées en partant de la section de rainure inversée respective (68 - 70) dans la même direction dans la direction circonférentielle du support d'enroulement (2), dans lequel un empilement (64) de plusieurs sections de rainures (5, 7) empilées dans la direction radiale est respectivement agencé dans les rainures (31), dans lequel, à l'exception d'une ou deux sections de rainures inversées (68 - 70) du conducteur respectif (77), les extrémités libres (9-15) des pinces de conducteur (5) qui prolongent les sections de rainures (6, 7) agencées dans la même position radiale dans les empilements (64) sont pliées dans la même direction dans la direction circonférentielle du support d'enroulement (2).

2. Moteur électrique selon la revendication 1,
**caractérisé en ce que**
la première et/ou la seconde section de conducteur (58, 60) sont guidées en méandres à travers les rainures (31) du support d'enroulement (2) au moins une fois dans la direction circonférentielle autour de l'axe de rotation (57).

3. Moteur électrique selon la revendication 1 ou 2,
**caractérisé en ce que**
dans les rainures (31) est agencé respectivement un empilement (64) de plusieurs sections de rainure (6, 7) empilées en direction radiale, dans lequel la première et/ou la seconde section de conducteur (58, 60) d'un conducteur respectif (77) s'étend au moins d'une section de rainure radialement la plus extérieure (65, 67) d'un empilement (64) à une section de rainure radialement la plus intérieure (66) du ou d'un autre empilement (64).

4. Moteur électrique selon l'une quelconque des revendications précédentes, **caractérisé en ce que**
dans les rainures (31) est respectivement agencée la ou une pile (31) de plusieurs sections de rainure (6, 7) empilées dans la direction radiale, dans lequel la section de rainure inversée (68 - 70) est la section de rainure (65, 67) radialement la plus extérieure de l'un des empilements (64) et l'une des sections de liaison (33 - 36, 55, 75, 76), qui relient la section de rainure inversée (68 - 70) aux autres sections de rainure (6, 7) du conducteur (77), est guidée vers l'extérieur dans la direction radiale, ou dans lequel la section de rainure inversée (68 - 70) est la section de rainure (66) radialement la plus intérieure de l'un des empilements (64) et l'une des sections de liaison (33 - 36, 55, 75, 76), qui relient la section de rainure inversée (68 - 70) aux autres sections de rainure (6, 7) du conducteur (77), est guidée vers l'intérieur dans la direction radiale.

5. Moteur électrique selon l'une quelconque des revendications précédentes, **caractérisé en ce que**
à l'exception d'une ou deux sections de rainure inversées (68 - 70) du conducteur respectif (77) et des sections de rainure (6, 7) du conducteur (77) qui sont voisines des points de raccordement (20, 22, 24, 26, 70, 74), toutes les sections de rainure (6, 7) du conducteur (77) sont reliées par deux sections de liaison (33 - 36, 55, 75, 76) aux autres sections de rainure (6, 7) du conducteur (77), qui sont guidées en partant de la section de rainure respective (6, 7) dans des directions opposées l'une à l'autre dans la direction circonférentielle du support d'enroulement (2).

6. Moteur électrique selon l'une quelconque des revendications précédentes, **caractérisé en ce que**
le support d'enroulement (2) porte un premier enroulement (28 - 30, 39, 40, 43 - 45, 48, 49) d'une première phase du moteur électrique (52) et un second enroulement (37, 38, 41, 42, 46, 47, 50, 51) d'une seconde phase du moteur électrique (52), dans lequel les parties de rainure (6, 7), dans lesquelles le premier et/ou le second point de raccordement (19, 20) du premier enroulement (28 - 30, 39, 40, 43 - 45, 48, 49) est réalisé, sont agencées, par rapport à l'axe de rotation (57) du moteur électrique (52), sur un autre rayon que les sections de rainure (6, 7) dans lesquelles le premier et/ou le second point de raccordement (70-74) du second enroulement (37, 38, 41, 42, 46, 47, 50, 51) est réalisé.

7. Moteur électrique selon l'une quelconque des revendications précédentes, **caractérisé en ce que**
le support d'enroulement (2) porte le ou un premier enroulement (28 - 30, 39, 40, 43 -45, 48, 49) de la ou d'une première phase du moteur électrique (52) et le ou un second enroulement (38, 42, 47, 51) de la ou d'une seconde phase du moteur électrique (52), dans lequel, lorsque le courant circule à travers le conducteur respectif (77) du premier point de raccordement (19, 21, 23, 25, 69, 73) au second point de raccordement (20, 22, 24, 26, 70, 74) de l'enroulement respectif (3, 4, 28 - 30, 37-51), le courant dans les sections de liaison (33 - 36, 55, 75, 76) d'une première section de raccordement du conducteur (77) du premier enroulement (28 - 30, 39, 40, 43 - 45, 48, 49), qui comprend le premier point de raccordement (19, 21, 23, 25, 69, 73) du premier enroulement (28 - 30, 39, 40, 43 - 45, 48, 49), est guidé avec un sens de rotation autour de l'axe de rotation (57) du moteur électrique (52), qui est opposé au sens de rotation avec lequel le courant est guidé dans les sections de liaison (33 - 36, 55, 75, 76) d'une seconde section de raccordement du conducteur (77) du second enroulement (38, 42, 47, 51), qui comprend le premier point de raccordement (19, 21, 23, 25, 69, 73) du second enroulement (38, 42, 47, 51).

8. Véhicule automobile,
**caractérisé en ce que**
il comprend un moteur électrique (52) selon l'une quelconque des revendications précédentes.

9. Procédé de fabrication d'au moins un enroulement (3, 4, 28 - 30, 37 - 51) pour un moteur électrique (52), comprenant les étapes consistant à :
- préparer un support d'enroulement (2) et plusieurs pinces conductrices (5), qui sont formées respectivement à partir d'une section de conducteur en forme de pince et qui réalisent respectivement deux sections de rainure (6, 7) et une section d'accouplement (8) reliant les sections de rainure (6, 7), dans lequel la section d'accouplement (8) forme une première section de liaison (75) pour ces sections de rainure (6, 7),
- insérer axialement les pinces de conducteur (5) dans le support d'enroulement (2) de sorte que les deux sections de rainure (6, 7) de chaque pince de conducteur (5) s'étendent dans une rainure respective (31) du support d'enroulement (2), et
- plier les extrémités libres (9-15) des pinces de conducteur (6, 7) dans une direction respective dans la direction circonférentielle du support d'enroulement (2) et les relier à une extrémité libre (9-15) d'une autre pince de conducteur respective (5) pour réaliser le conducteur (77) à partir des sections de conducteur, dans lequel une extrémité libre (15) d'au moins une pince de conducteur (5) est pliée dans la même direction dans la direction circonférentielle du support d'enroulement (2), dans laquelle s'étend également une section d'accouplement (8) reliant les sections de rainure (6, 7) de cette pince de conducteur (5), de sorte que le conducteur (77) présente au moins une section de rainure (6, 7) qui, en tant que section de rainure inversée (68 - 70), est reliée par le biais de deux sections de liaison (33 - 36, 55, 75, 76) aux autres sections de rainure (6, 7) du conducteur (77) qui, en partant de la section de rainure inversée respective (68 - 70), sont guidées dans la même direction dans la direction circonférentielle du support d'enroulement (2), dans lequel un empilement (64) de plusieurs sections de rainures (5, 7) empilées dans la direction radiale est agencé dans les rainures (31) respectives, dans lequel, à l'exception d'une ou deux sections de rainures inversées (68 - 70) du conducteur respectif (77), les extrémités libres (9-15) des pinces de conducteur (5) prolongeant les sections de rainures (6, 7) agencées dans la même position radiale dans les empilements (64) sont pliées dans la même direction dans la direction circonférentielle du support d'enroulement (2).

10. Procédé selon la revendication 9, **caractérisé en ce que** les extrémités libres (9-15) des pinces de conducteur d'un enroulement (3, 4, 28 - 30, 37 - 51) sont d'abord reliées entre elles de sorte qu'il en résulte une boucle de conducteur fermée, après quoi la liaison entre deux extrémités libres (9-15) est séparée ou une section d'accouplement (8) de l'une des pinces de conducteur (5) est séparée pour réaliser un premier et un second point de raccordement (19 - 26, 69, 70, 73, 74) de l'enroulement (3, 4, 28-30, 37-51).
